(19) **Europäisches Patentamt**
**European Patent Office**
**Office européen des brevets**

(11) **EP 4 749 907 A1**

(12) **EUROPEAN PATENT APPLICATION**

(43) Date of publication:
**27.05.2026 Bulletin 2026/22**

(21) Application number: **25209754.8**

(22) Date of filing: **20.10.2025**

(51) International Patent Classification (IPC):
**H02M 3/335** (2006.01)        **H02M 1/32** (2007.01)

(52) Cooperative Patent Classification (CPC):
**H02M 3/33584; H02M 1/327; H02M 3/01;**
**H02M 3/33571; H02M 3/33573; H02M 3/33576**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **20.11.2024  US 202463722763 P**
**11.09.2025  US 202519326574**

(71) Applicant: **Delta Electronics, Inc.**
**Neihu, Taipei 11491 (TW)**

(72) Inventors:
• **Jin, Feng**
  **Morrisville, NC, 27560 (US)**
• **Kumar, Misha**
  **Morrisville, NC, 27560 (US)**
• **Barbosa, Peter Mantovanelli**
  **320023 Taoyuan City (TW)**

(74) Representative: **Uexküll & Stolberg**
**Partnerschaft von**
**Patent- und Rechtsanwälten mbB**
**Beselerstraße 4**
**22607 Hamburg (DE)**

(54) **DC-DC POWR SUPPLY AND CONTROL METHOD THEREOF**

(57)     A DC-DC power supply (1, 1a) and control method thereof are provided. The DC-DC power supply (1, 1a) includes a transformer (2, 2a, 2b, 2c, 2d, 2e, 2f), a primary circuit (3), a secondary circuit (4) and a controller (5, 74). The transformer (2, 2a, 2b, 2c, 2d, 2e, 2f) includes a primary winding (21, 21a, 21b, 21c, 21d, 21e, 21f) and a secondary winding (22, 22a, 22b, 22c, 22d, 22e, 22f). The primary circuit (3) is connected with the primary winding (21, 21a, 21b, 21c, 21d, 21e, 21f) and includes a plurality of first primary switches (Q1, Q2, Q1a, Q2a, Q3a, Q4a, Q1b, Q2b, Q1c, Q2c, Q1d, Q2d, Q1e, Q2e), and a plurality of second primary switches (Q3, Q4, Q1a, Q2a, Q3a, Q4a, Q1b, Q2b, Q3d, Q4d, Q3e, Q4e). The secondary circuit (4) is connected with the secondary winding (22, 22a, 22b, 22c, 22d, 22e, 22f). The controller (5, 74) is configured to alternately control the operation of the first primary switches (Q1, Q2, Q1a, Q2a, Q3a, Q4a, Q1b, Q2b, Q1c, Q2c, Q1d, Q2d, Q1e, Q2e) and the second primary switches (Q3, Q4, Q1a, Q2a, Q3a, Q4a, Q1b, Q2b, Q3d, Q4d, Q3e, Q4e) for periodically adjusting a turn-off loss difference therebetween.

FIG. 1

EP 4 749 907 A1

**Description**

FIELD OF THE INVENTION

This present disclosure relates to a DC-DC power supply, and more particularly to a DC-DC power supply and a control method of the DC-DC power supply.

BACKGROUND OF THE INVENTION

The conventional DC-DC power supply uses some control methods to adjust the voltage gain in resonant converters. Such as phase-shift control (PSC) and delay time control (DTC). In the PSC method, a phase shift is introduced between the first and second bridge arm on the primary side of the converter. In the DTC method, a similar phase shift is applied on the secondary side. However, the DC-DC power supplies using these conventional methods have some drawbacks. They tend to exhibit increased power loss and uneven thermal distribution.

Therefore, there is a need to provide a DC-DC power supply and a control method thereof to overcome the drawbacks.

SUMMARY OF THE INVENTION

The present disclosure provides a DC-DC power supply. The DC-DC power supply of the present disclosure includes a controller. The controller is configured to alternately control the operation of the two first primary switches of the first bridge arm and the two second primary switches of the second bridge arm for periodically adjusting a turn-off loss difference therebetween. The phase shift and the delay time between the first bridge arm and the second bridge arm is switched. The turn-off losses of the devices are exchanged. Consequently, the thermal performance of the DC-DC power supply is balanced, and the losses are distributed evenly among the devices.

In accordance with an aspect of the present disclosure, a DC-DC power supply is provided. The DC-DC power supply includes a transformer, a primary circuit, a secondary circuit and a controller. The transformer includes a primary winding and a secondary winding. The primary circuit is connected with the primary winding and includes a plurality of first primary switches, and a plurality of second primary switches. The secondary circuit is connected with the secondary winding. The controller is configured to alternately control the operation of the first primary switches and the second primary switches for periodically adjusting a turn-off loss difference therebetween.

In accordance with another aspect of the present disclosure, a control method of a DC-DC power supply is provided. The DC-DC power supply includes a transformer, a primary circuit and a secondary circuit. The primary circuit includes a plurality of first primary switches, and a plurality of second primary switches. The control method includes the following step. A controller is provided to alternately control the operation of the first primary switches and the second primary switches of the primary circuit for periodically adjusting a turn-off loss difference therebetween.

In accordance with another aspect of the present disclosure, a DC-DC power supply is provided. The DC-DC power supply includes three transformers, a primary circuit, a secondary circuit and a controller. Each of the three transformers includes a primary winding and a secondary winding. The primary circuit is connected with the primary winding and includes a plurality of first primary switches, a plurality of second primary switches, and a plurality of third primary switches. The secondary circuit is connected with the secondary winding and includes a plurality of first secondary switches, a plurality of second secondary switches, and a plurality of third secondary switches. The controller is configured to alternately control the operation of the first secondary switches, the second secondary switches, and the third secondary switches of the secondary circuit for periodically adjusting a turn-off loss difference therebetween.

The above contents of the present disclosure will become more readily apparent to those ordinarily skilled in the art after reviewing the following detailed description and accompanying drawings, in which:

BRIEF DESCRIPTION OF THE DRAWINGS

FIG. 1 is a schematic circuit view illustrating a DC-DC power supply according to a first embodiment of the present disclosure;

FIG. 2 shows sequence diagram of turn-off loss situation of the primary switches of the DC-DC power supply of FIG. 1;

FIGS. 3A to 3F show schematic circuit view of operation of the primary switches and the secondary switches of one embodiment of the DC-DC power supply of FIG. 1;

FIG. 4A shows waveforms of operation of the primary switches, the voltage and the current of elements of the DC-DC power supply of FIG. 1 before the primary switches are controlled;

FIG. 4B shows waveforms of operation of the primary switches, the voltage and the current of elements of the DC-DC power supply of FIG. 1 after the primary switches are controlled;

FIG. 5 is a thermal image of the primary switches of the DC-DC power supply of FIG. 1;

FIG. 6 shows waveforms of loss of the primary switches of the DC-DC power supply of FIG. 1;

FIG. 7 is a schematic circuit view illustrating a sensing circuit for sensing the primary switches of the DC-DC power supply of FIG. 1;

FIG. 8 is a schematic circuit view illustrating a DC-DC power supply according to a second embodiment of the present disclosure;

FIGS. 9A to 9F show schematic circuit view of operation of the primary switches and the secondary switches of another embodiment of the DC-DC power supply of FIG. 1;

FIG. 10 shows waveforms of operation of the primary switches and the secondary switches and the current of elements of the DC-DC power supply of FIG. 1;

FIGS. 11A to 11F are schematic circuit views illustrating the first resonant sub circuit of the primary circuit and the second resonant sub circuit of the secondary circuit of the DC-DC power supply of the present disclosure;

FIGS. 12A to 12E are schematic circuit views illustrating the bridge arm of the primary circuit and the bridge arm of the secondary circuit of the DC-DC power supply of the present disclosure;

FIG. 13 is a schematic circuit view illustrating a DC-DC power supply according to a third embodiment of the present disclosure; and

FIGS. 14A to 14D are schematic circuit views illustrating the bridge arm of the primary circuit and the bridge arm of the secondary circuit of the DC-DC power supply of FIG. 13.

## DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

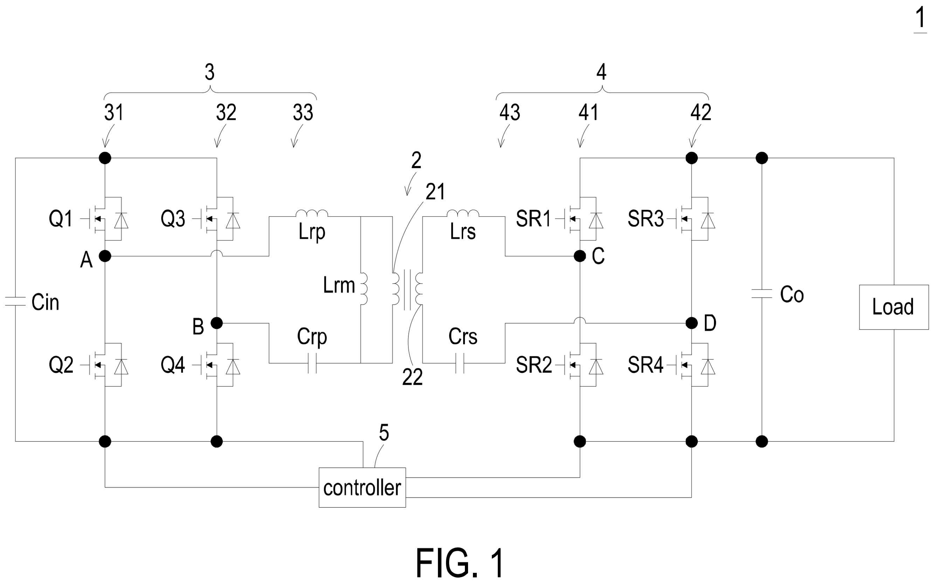

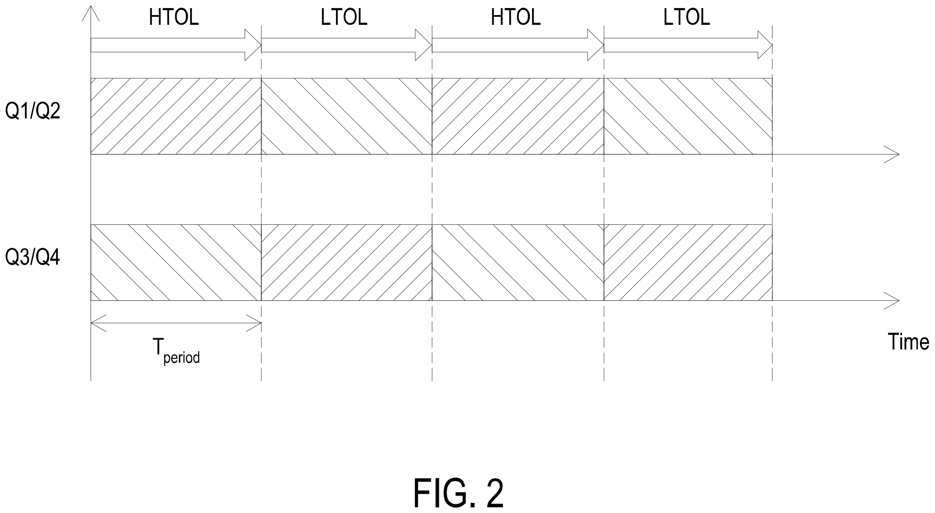

FIG. 1 is a schematic circuit view illustrating a DC-DC power supply according to a first embodiment of the present disclosure. FIG. 2 shows sequence diagram of turn-off loss situation of the primary switches of the DC-DC power supply of FIG. 1. As shown in FIG. 1, the DC-DC power supply 1 includes a transformer 2, a primary circuit 3, a secondary circuit 4, an input capacitor Cin, an output capacitor Co and a controller 5. The transformer 2 includes a primary winding 21 and a secondary winding 22. The primary circuit 3 is connected with the primary winding 21 of the transformer 2. The primary circuit 3 includes a first bridge arm 31, a second bridge arm 32 and a first resonant sub circuit 33. The first bridge arm 31 includes two first primary switches Q1, Q2. The two first primary switches Q1, Q2 are connected in series to form a first connection node A. The second bridge arm 32 is connected with the first bridge arm 31 in parallel. The second bridge arm 32 includes two second primary switches Q3, Q4. The two second primary switches Q3, Q4 are connected in series to form a second connection node B. The first resonant sub circuit 33 includes a first resonant inductor Lrp, a second resonant inductor Lrm and a first resonant capacitor Crp. The first resonant inductor Lrp, the second resonant inductor Lrm and the first resonant capacitor Crp are connected between the first connection node A and the second connection node B in sequence. The second resonant inductor Lrm is connected with the primary winding 21 of the transformer 2 in parallel.

The secondary circuit 4 is connected with the secondary winding 22 of the transformer 2. The secondary circuit 4 includes a third bridge arm 41, a fourth bridge arm 42 and a second resonant sub circuit 43. The third bridge arm 41 includes two first secondary switches SR1, SR2. The first secondary switches SR1, SR2 are connected in series to form a third connection node C. The fourth bridge arm 42 is connected with the third bridge arm 41 in parallel. The fourth bridge arm 42 includes two second secondary switches SR3, SR4. The second secondary switches SR3, SR4 are connected in series to form a fourth connection node D. The second resonant sub circuit 43 includes a third resonant inductor Lrs and a second resonant capacitor Crs. The third resonant inductor Lrs is connected between one end of the secondary winding 22 of the transformer 2 and the third connection node C. The second resonant capacitor Crs is connected between the other end of the secondary winding 22 of the transformer 2 and the fourth connection node D. The input capacitor Cin is connected with the first bridge arm 31 and the second bridge arm 32 of the primary circuit 3 in parallel. The output capacitor Co is connected with the third bridge arm 41 and the fourth bridge arm 42 of the secondary circuit 4 in parallel.

The controller 5 is connected with the first bridge arm 31 and the second bridge arm 32 of the primary circuit 3 and the third bridge arm 41 and the fourth bridge arm 42 of the secondary circuit 4. The controller 5 is configured to alternately control the operation of the two first primary switches Q1, Q2 of the first bridge arm 31 and the two second primary switches Q3, Q4 of the second bridge arm 32, and the operation of the third bridge arm 41 and the fourth bridge arm 42 of the secondary circuit 4. As shown in FIG. 2, in the first period time, the two first primary switches Q1, Q2 of the first bridge arm 31 have high turn-off loss (HTOL), and the two second primary switches Q3, Q4 of the second bridge arm 32 have low turn-off loss (LTOL). In the second period time, the two first primary switches Q1, Q2 of the first bridge arm 31 have low turn-off loss (LTOL), and the two second primary switches Q3, Q4 of the second bridge arm 32 have high turn-off loss (HTOL).

Namely, the controller 5 is configured to alternately control the operation of the two first primary switches Q1, Q2 of the first bridge arm 31 and the two second primary switches Q3, Q4 of the second bridge arm 32 for periodically adjusting a turn-off loss difference therebetween.

In this embodiment, the two first primary switches Q1, Q2 of the first bridge arm 31 includes a first sub switch Q1 and a second sub switch Q2. The two second primary switches Q3, Q4 of the second bridge arm 32 includes a third sub switch Q3 and a fourth sub switch Q4. The two first secondary switches SR1, SR2 of the third bridge arm 41 includes a fifth sub switch SR1 and a sixth sub switch SR2. The two second secondary switches SR3, SR4 of the fourth bridge arm 42 includes a seventh sub switch SR3 and an eighth sub switch SR4.

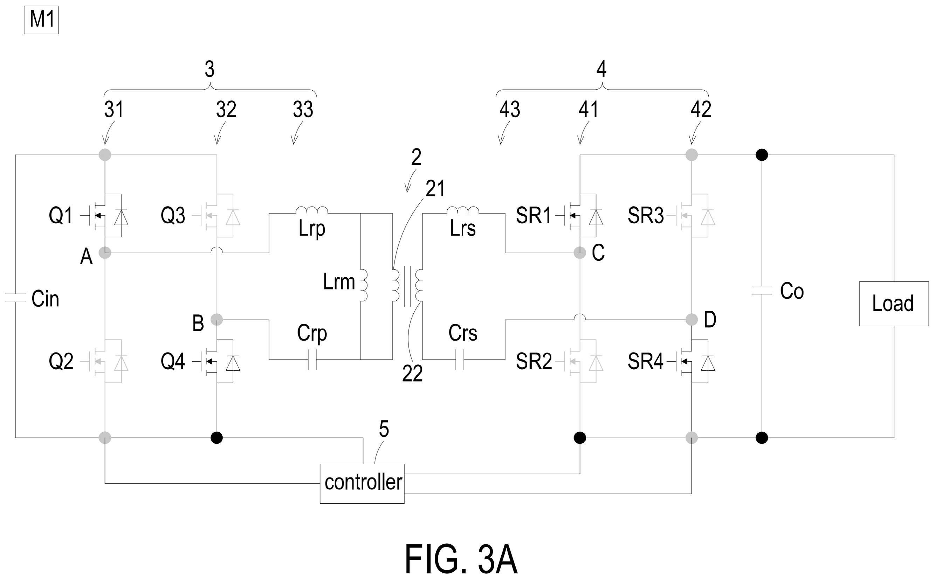

FIGS. 3A to 3F show schematic circuit view of operation of the primary switches and the secondary switches of one embodiment of the DC-DC power supply of FIG. 1. As shown in FIGS. 3A to 3F, there are six operation modes of the primary switches and the secondary switches of the DC-DC power supply 1 of FIG. 1.

The first operation mode M1 is shown in FIG. 3A. In the first operation M1, the first sub switch Q1, the fourth sub switch Q4, the fifth sub switch SR1 and the eighth sub switch SR4 are controlled to turn on. The second sub switch Q2, the third sub switch Q3, the sixth sub switch SR2 and the seventh sub switch SR3 are controlled to turn off.

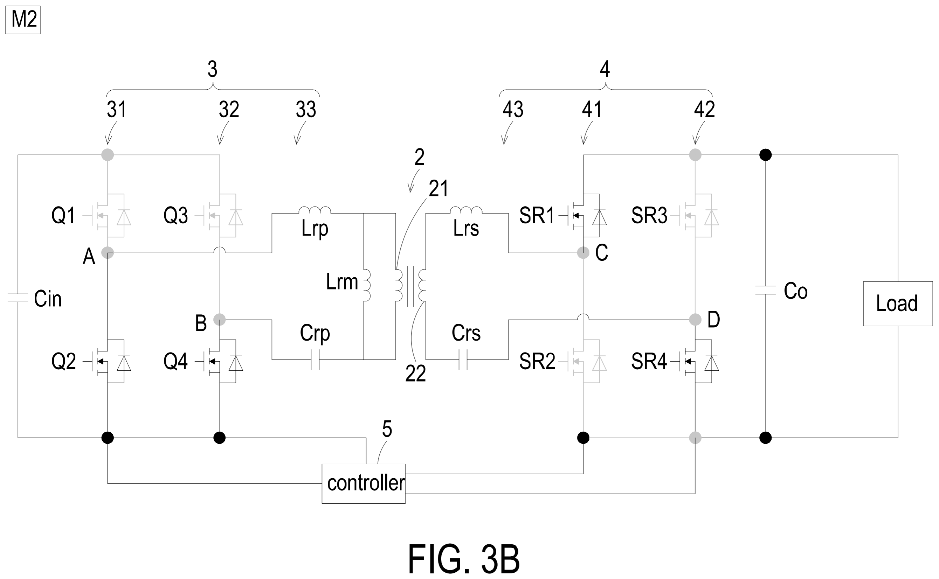

The second operation mode M2 is shown in FIG. 3B. In the second operation M2, the second sub switch Q2, the fourth sub switch Q4, the fifth sub switch SR1 and the eighth sub switch SR4 are controlled to turn on. The first sub switch Q1, the third sub switch Q3, the sixth sub switch SR2 and the seventh sub switch SR3 are controlled to turn off.

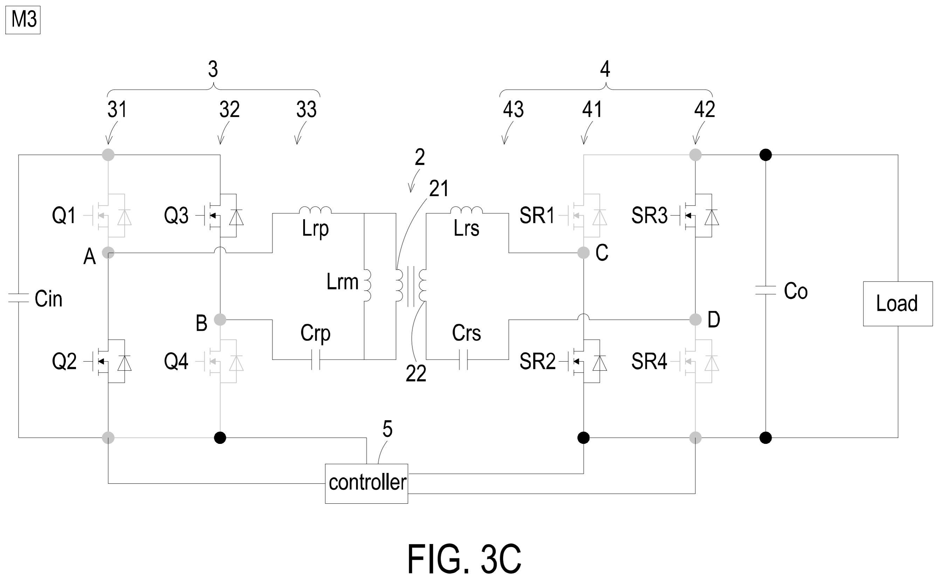

The third operation mode M3 is shown in FIG. 3C. In the third operation M3, the second sub switch Q2, the third sub switch Q3, the sixth sub switch SR2 and the seventh sub switch SR3 are controlled to turn on. The first sub switch Q1, the fourth sub switch Q4, the fifth sub switch SR1 and the eighth sub switch SR4 are controlled to turn off.

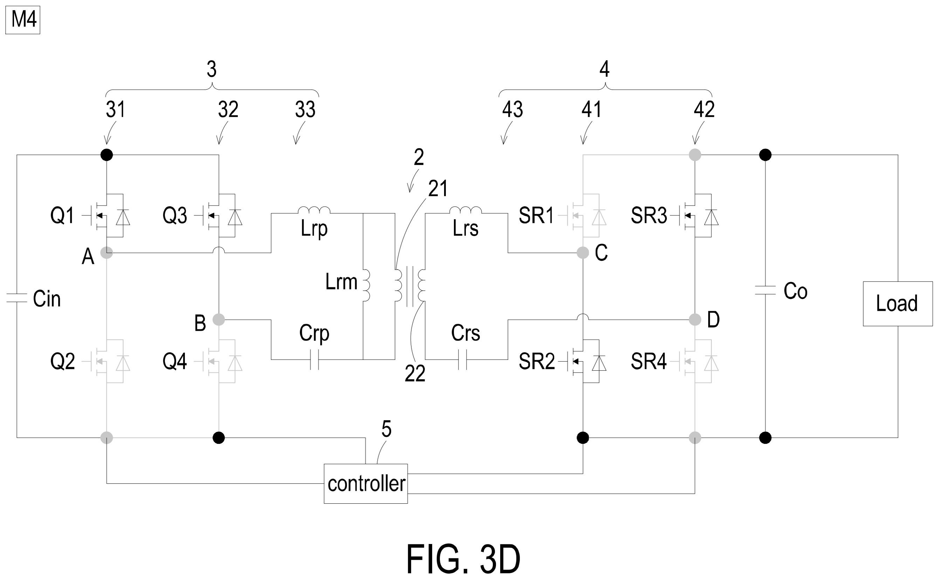

The fourth operation mode M4 is shown in FIG. 3D. In the fourth operation M4, the first sub switch Q1, the third sub switch Q3, the sixth sub switch SR2 and the seventh sub switch SR3 are controlled to turn on. The second sub switch Q2, the fourth sub switch Q4, the fifth sub switch SR1 and the eighth sub switch SR4 are controlled to turn off.

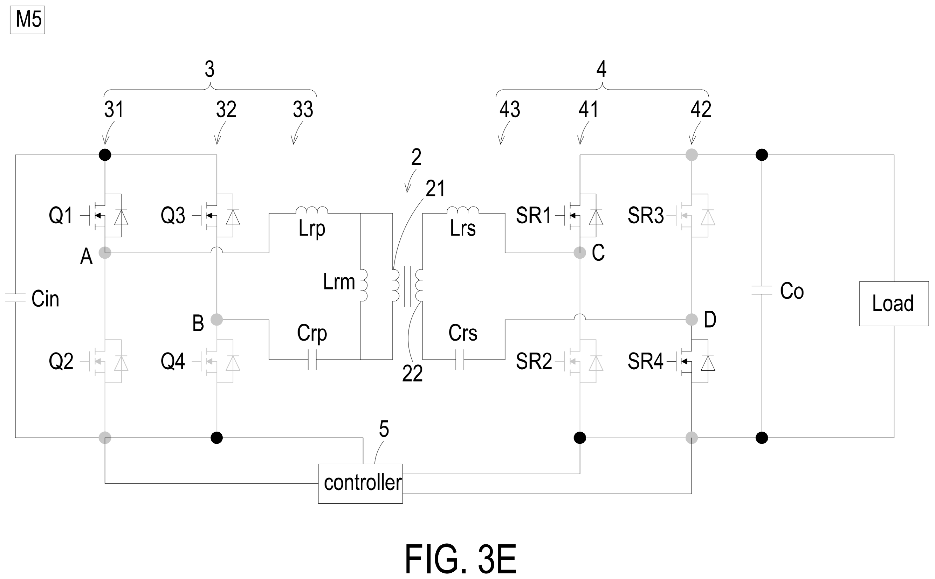

The fifth operation mode M5 is shown in FIG. 3E. In the fifth operation M5, the first sub switch Q1, the third sub switch Q3, the fifth sub switch SR1 and the eighth sub switch SR4 are controlled to turn on. The second sub switch Q2, the fourth sub switch Q4, the sixth sub switch SR2 and the seventh sub switch SR3 are controlled to turn off.

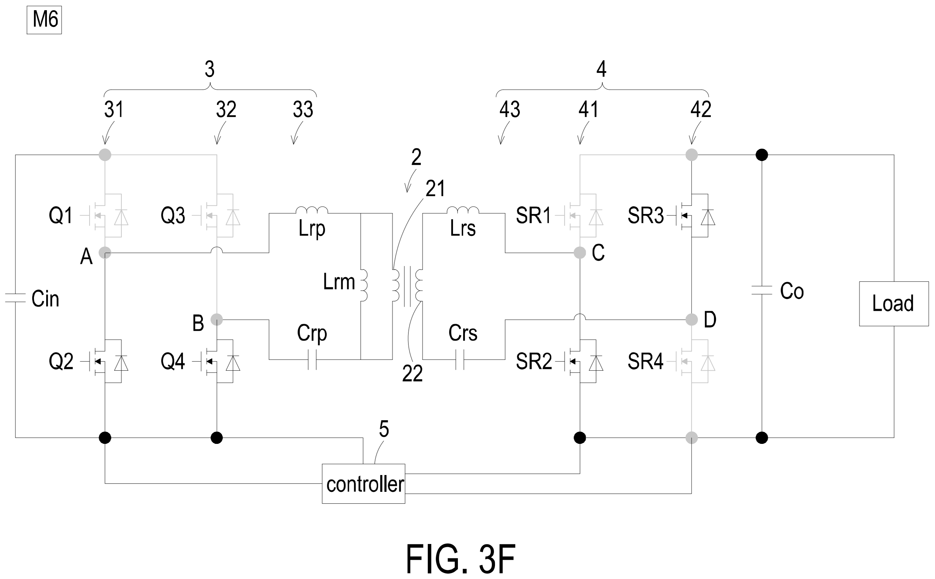

The sixth operation mode M6 is shown in FIG. 3F. In the sixth operation M6, the second sub switch Q2, the fourth sub switch Q4, the sixth sub switch SR2 and the seventh sub switch SR3 are controlled to turn on. The first sub switch Q1, the third sub switch Q3, the fifth sub switch SR1 and the eighth sub switch SR4 are controlled to turn off.

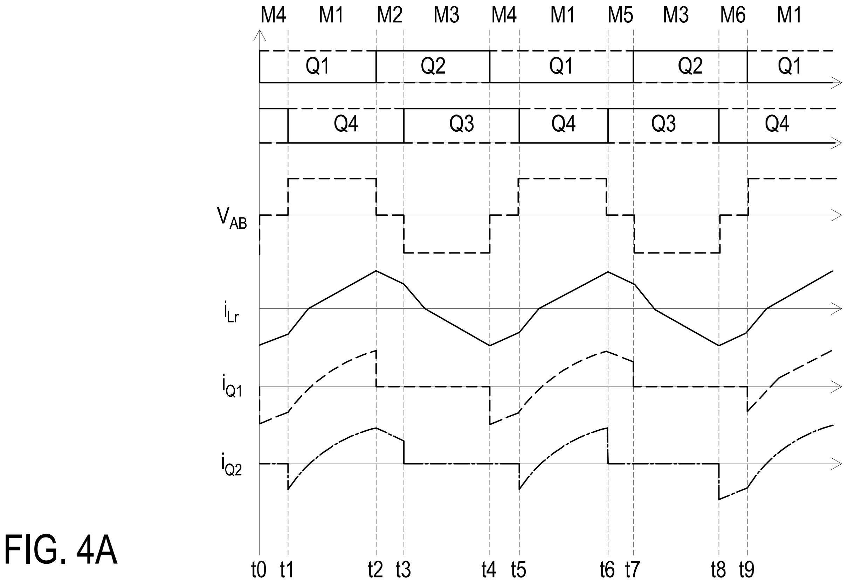

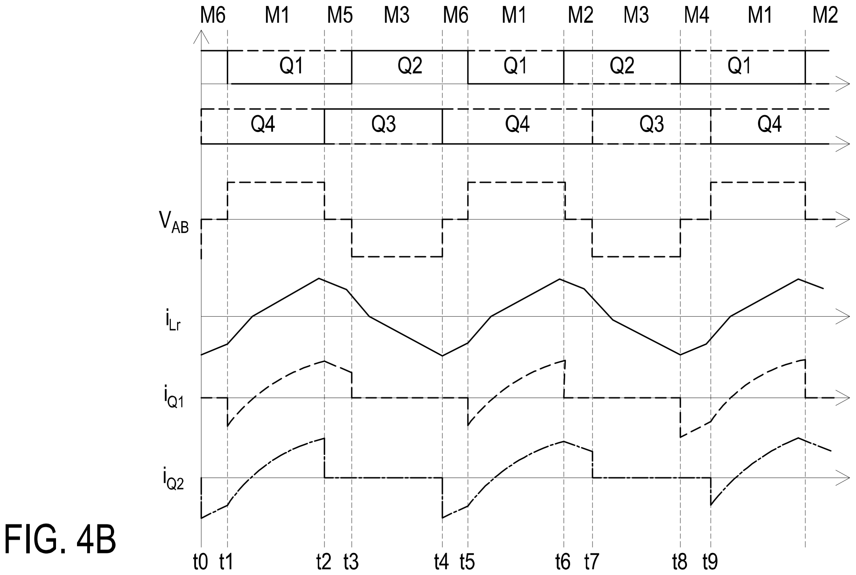

FIG. 4A shows waveforms of operation of the primary switches, the voltage and the current of elements of the DC-DC power supply of FIG. 1 before the primary switches are controlled. FIG. 4B shows waveforms of operation of the primary switches, the voltage and the current of elements of the DC-DC power supply of FIG. 1 after the primary switches are controlled. As shown in FIGS. 4A and 4B, the operation of the primary switches, voltage $V_{AB}$ between the first connection node A and the second connection node B, current $i_{Lr}$ of resonant inductor, current $i_{Q1}$ of the first sub switch Q1 and current $i_{Q2}$ of the second sub switch Q2 are shown in sequence.

In FIG. 4A, before the primary switches are controlled (such as before being enabled or activated), the operation modes are the fourth mode M4, the first mode M1, the second mode M2, the third mode M3, the fourth mode M4, the first mode M1, the fifth mode M5, the third mode M3, the sixth mode M6 and the first mode M1 in sequence. In FIG. 4B, after the primary switches are controlled, the operation modes are the sixth mode M6, the first mode M1, the fifth mode M5, the third mode M3, the sixth mode M6, the first mode M1, the second mode M2, the third mode M3, the fourth mode M4, the first mode M1 and the second mode M2 in sequence. During the operation of the primary switches, the system undergoes several mode changeovers between FIG. 4A and FIG. 4B. For example, from time t0 to t1 and time t4 to t5, the fourth mode M4 of FIG. 4A is switched to the sixth mode M6 of FIG. 4B. From time t2 to t3, the second mode M2 of FIG. 4A is switched to the fifth mode M5 of FIG. 4B. From the time t6 to t7, the fifth mode M5 of FIG. 4A is switched to the second mode M2 of FIG. 4B. From the time t8 to t9, the sixth mode M6 of FIG. 4A is switched to the fourth mode M4 of FIG. 4B.

In FIG. 4B, the first mode M1 is switched to the fifth mode M5 at time t2. Namely, when the fifth sub switch SR1 and the eighth sub switch SR4 are turned on and the sixth sub switch SR2 and the seventh sub switch SR3 are turned off, the controller 5 controls the first sub switch Q1 to turn on, and the controller 5 switches conduction from the fourth sub switch Q4 to the third sub switch Q3. The third mode M3 is switched to the sixth mode M6 at time t4. Namely, when the sixth sub switch SR2 and the seventh sub switch SR3 are turned on and the fifth sub switch SR1 and the eighth sub switch SR4 are turned off, the controller 5 controls the second sub switch Q2 to turn on, and the controller 5 switches conduction from the third sub switch Q3 to the fourth sub switch Q4.

As shown in FIGS. 4A, the duty cycle of the first sub switch Q1 changes from the interval between time t0 and time t2 to the interval between time t4 and time t7. Namely, the duty cycle of the first sub switch Q1 is increased. The duty cycle of the fourth sub switch Q4 changes from the interval between time t1 and time t3 to the interval between time t5 and time t6. Namely, the duty cycle of the fourth sub switch Q4 is reduced. The voltage $V_{AB}$ between the first connection node A and the second connection node B, and the current $i_{Lr}$ of resonant inductor are stable. The turn-off current of the first sub switch Q1 is from high current to low current, and the turn-off current of the fourth sub switch Q4 is from low current to high current. The voltage $V_{AB}$ between the first connection node A and the second connection node B and the current $i_{Lr}$ of resonant inductor remain stable without any current ringing. In FIG. 4A, the first sub switch Q1 turns off at high current and the fourth sub switch Q4 turns off at low current before the primary switches are controlled. In FIG. 4B, the first sub switch Q1 turns off at low current and the fourth sub switch Q4 turns off at high current after the primary switches are controlled. After a certain period, the phase shift and the delay time between the first bridge arm 31 and the second bridge arm 32 is switched. The turn-off losses of the devices are exchanged. Consequently, the thermal performance of the DC-DC power supply 1 is balanced, and the losses are distributed evenly among the devices.

From above, the DC-DC power supply 1 of the present disclosure includes a controller 5. The controller 5 is configured to alternately control the operation of the two first primary switches Q1, Q2 of the first bridge arm 31 and the two second primary switches Q3, Q4 of the second bridge arm 32 for periodically adjusting a turn-off loss difference therebetween. The phase shift and the delay time between the first bridge arm 31 and the second bridge arm 32 is switched. The turn-off losses of the devices are exchanged. Consequently, the thermal performance of the DC-DC power supply 1 is balanced, and the losses are distributed evenly among the devices.

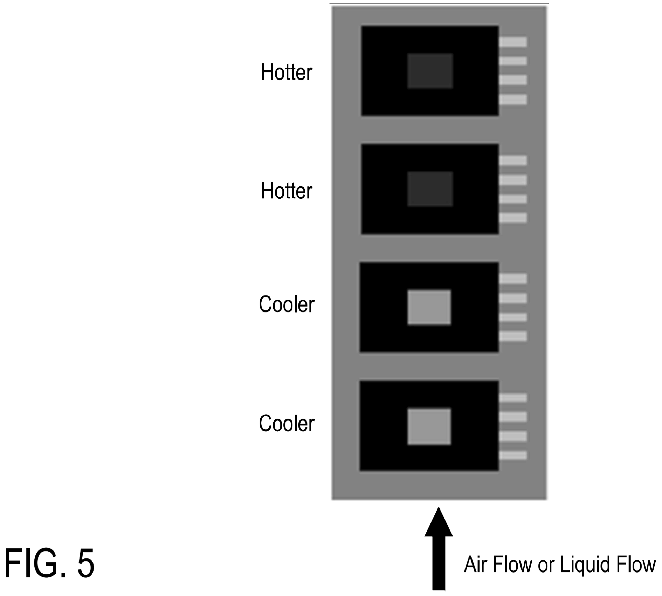

FIG. 5 is a thermal image of the primary switches of the DC-DC power supply of FIG. 1. As shown in FIG. 5, the four sub switches of the DC-DC power supply is disposed on a heat sink 6 with either air flow or liquid flow cooling. The position of the four sub switches creates varying thermal conditions due to uneven thermal distribution. The thermal disparities can become even more pronounced when additional mechanical layout factors are considered. The duty cycle of the four sub switches can be adjusted to reduce the loss.

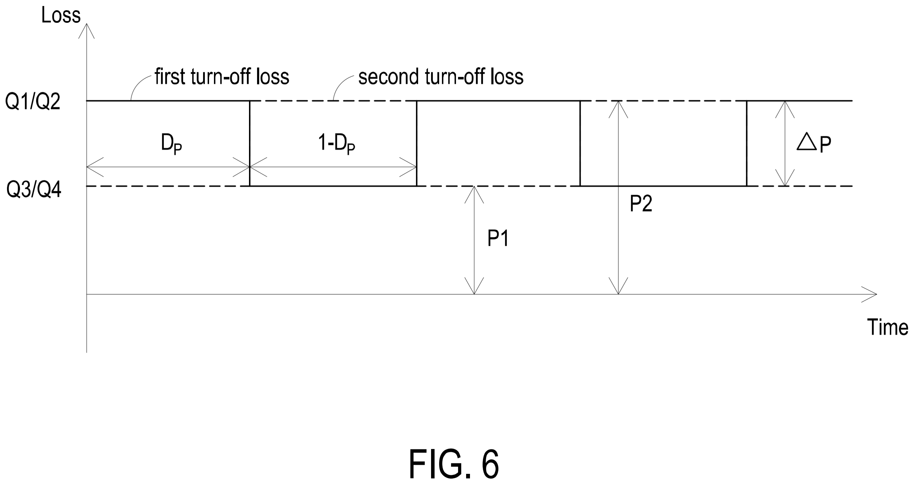

FIG. 6 shows waveforms of loss of the primary switches of the DC-DC power supply of FIG. 1. As shown in FIG. 6, the first sub switch Q1 and the second sub switch Q2 exhibit a first turn-off loss P2 during the first duty cycle Dp, and the third sub switch Q3 and the fourth sub switch Q4 exhibit a second turn-off loss P1 during the second duty cycle (1-Dp), where Dp is a number between 0 and 1. A loss difference $\Delta P$ is formed between the first turn-off loss P2 and the second turn-off loss P1. The first turn-off loss P2 is greater than the second turn-off loss P1 during a first duty cycle Dp. The first turn-off loss P2 is less than the second turn-off loss P1 during a second duty cycle (1-Dp). The average loss of the first sub switch Q1 and the second sub switch Q2 and the average loss of the third sub switch Q3 and the fourth sub switch Q4 are shown in the below equations.

$$P_{Q1Q2\_avg} = P2 - Dp * \Delta P \dots (1)$$

$$P_{Q3Q4\_avg} = P2 - (1 - Dp) * \Delta P \dots (2)$$

$P_{Q1Q2\_avg}$ is the average loss of the first sub switch Q1 and the second sub switch Q2. $P_{Q3Q4\_avg}$ is the average loss of the third sub switch Q3 and the fourth sub switch Q4. The average loss can be adjusted by selecting different values for the first duty cycle Dp and the second duty cycle (1-Dp). The first duty cycle Dp and the second duty cycle (1-Dp) can used as control variables to adjust average loss so that the thermal performance can be adjustable. Consequently, the duty cycles of the operation modes within one periodic cycle can be varied effectively.

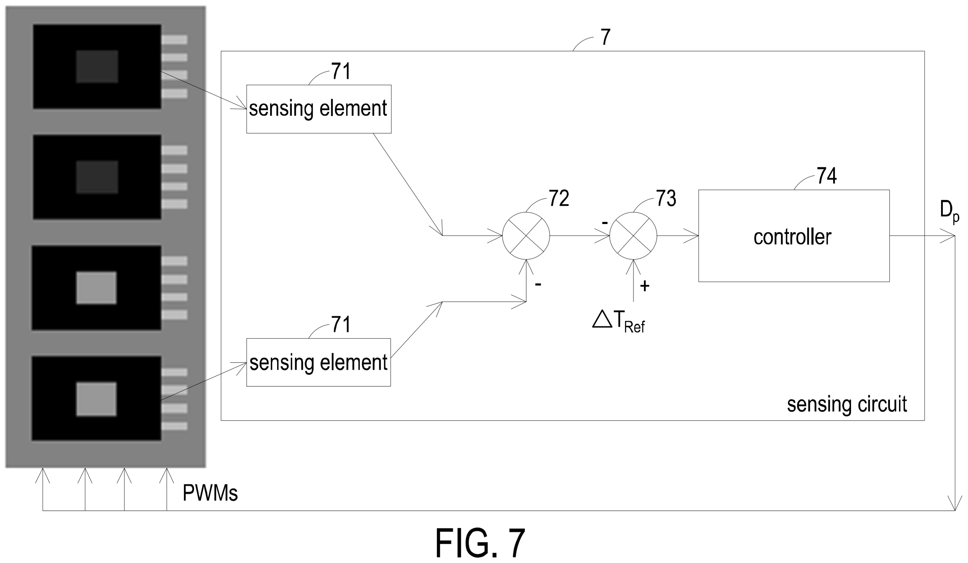

In some embodiments, the duty cycles are provided by sensing the temperature of the device. FIG. 7 is a schematic circuit view illustrating a sensing circuit for sensing the primary switches of the DC-DC power supply of FIG. 1. As shown in FIG. 7, the DC-DC power supply 1 includes a sensing circuit 7. The sensing circuit 7 includes at least two sensing elements 71, a first subtractor 72, a second subtractor 73 and a controller 74. The two sensing elements 71 detect the corresponding primary switch to provide two sensing signals, respectively. The first subtractor 72 subtracts hotter one of the two sensing signals to cooler one of the two sensing signals to provide a first difference value. The second subtractor 73 subtracts a reference value $\Delta T_{Ref}$ to the first difference value to provide a second difference value. The controller 74 processes the second difference value to provide duty cycles to the primary switches. In some embodiments, the controller 74 is constituted by the controller 5 of FIG. 1.

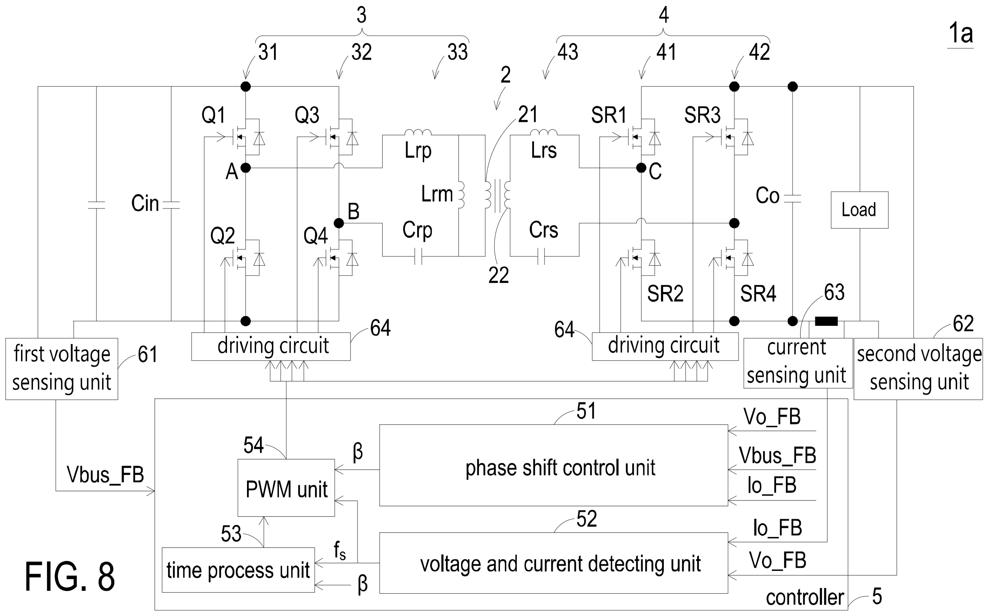

FIG. 8 is a schematic circuit view illustrating a DC-DC power supply according to a second embodiment of the present disclosure. As shown in FIG. 8, compared with the DC-DC power supply of FIG. 1, the controller 5 of the DC-DC power supply 1a of this embodiment includes a phase shift control unit 51, a voltage and current detecting unit 52, a time process unit 53 and a pulse width modulation (PWM) unit 54. The phase shift control unit 51 detects an output voltage Vo_FB of the output terminal of the DC-DC power supply 1a, a bus voltage Vbus_FB and an output current Io_FB of the output terminal of the DC-DC power supply 1a to output a parameter signal $\beta$. The voltage and current detecting unit 52 detects the output voltage Vo_FB and the output current Io_FB of the output terminal of the DC-DC power supply 1a to output a frequency signal $f_s$. The time process unit 53 detects the frequency signal $f_s$ and the parameter signal $\beta$ to output an update signal. The PWM unit 54 detects the parameter signal $\beta$, the frequency signal $f_s$ and the update signal to output a PWM signal, so as to control the operation of the first primary switches Q1, Q2, the second primary switches Q3, Q4 of the primary circuit 3, the first secondary switches SR1, SR2 and the second secondary switches SR3, SR4 of the secondary circuit 4.

In some embodiments, the DC-DC power supply 1a includes a first voltage sensing unit 61, a second voltage sensing unit 62, a current sensing unit 63 and two driving circuits 64. The first voltage sensing unit 61 senses a voltage of the input terminal of the DC-DC power supply 1a to output the busbar voltage Vbus_FB. The second voltage sensing unit 62 senses a voltage of the output terminal of the DC-DC power supply 1a to output the output voltage Vo_FB. The current sensing unit 63 senses a current of the output terminal of the DC-DC power supply 1a to output the output current Io_FB. The two driving circuits 64 receive the PWM signal to control the operation of the first primary switches Q1, Q2, the second primary switches Q3, Q4 of the primary circuit 3, the first secondary switches SR1, SR2 and the second secondary switches SR3, SR4 of the secondary circuit 4.

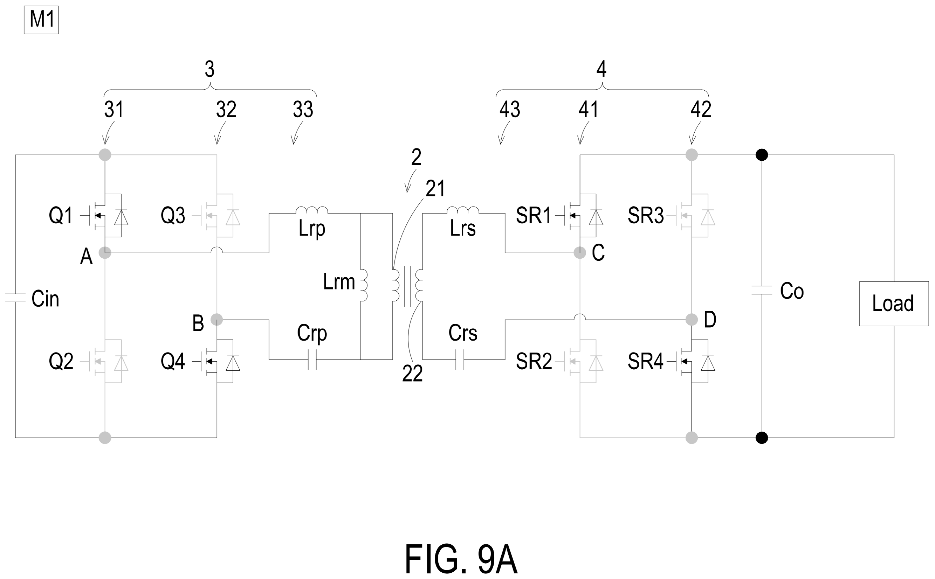

FIGS. 9A to 9F show schematic circuit view of operation of the primary switches and the secondary switches of another embodiment of the DC-DC power supply of FIG. 1. As shown in FIGS. 9A to 9F, compared with the operation modes M1 to M6 of FIGS. 3A to 3F, there are another six operation modes of the primary switches and the secondary switches of the DC-DC power supply 1 of FIG. 1.

The first operation mode M1 is shown in FIG. 9A. In the first operation M1, the first sub switch Q1, the fourth sub switch Q4, the fifth sub switch SR1 and the eighth sub switch SR4 are controlled to turn on. The second sub switch Q2, the third sub switch Q3, the sixth sub switch SR2 and the seventh sub switch SR3 are controlled to turn off.

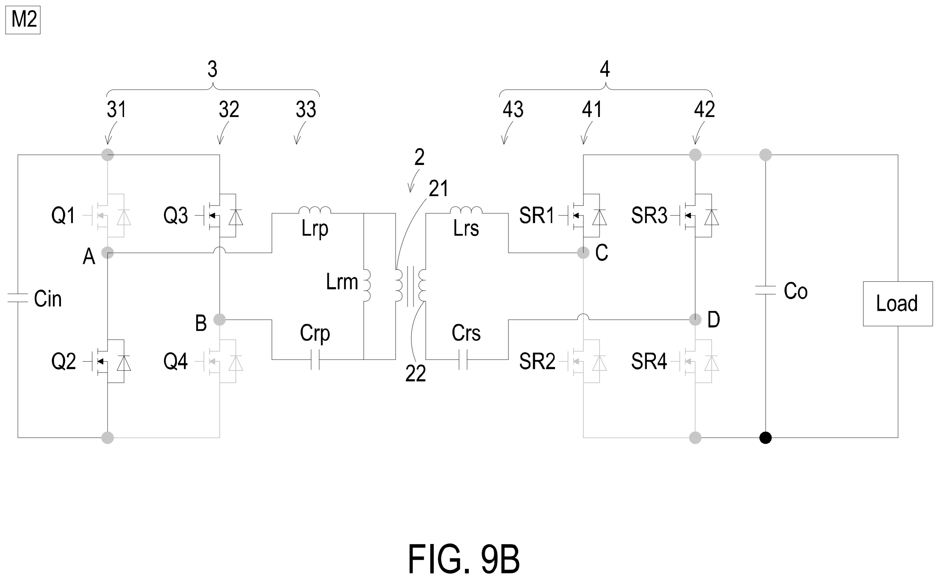

The second operation mode M2 is shown in FIG. 9B. In the second operation M2, the second sub switch Q2, the third sub switch Q3, the fifth sub switch SR1 and the seventh sub switch SR3 are controlled to turn on. The first sub switch Q1, the fourth sub switch Q4, the sixth sub switch SR2 and the eighth sub switch SR4 are controlled to turn off.

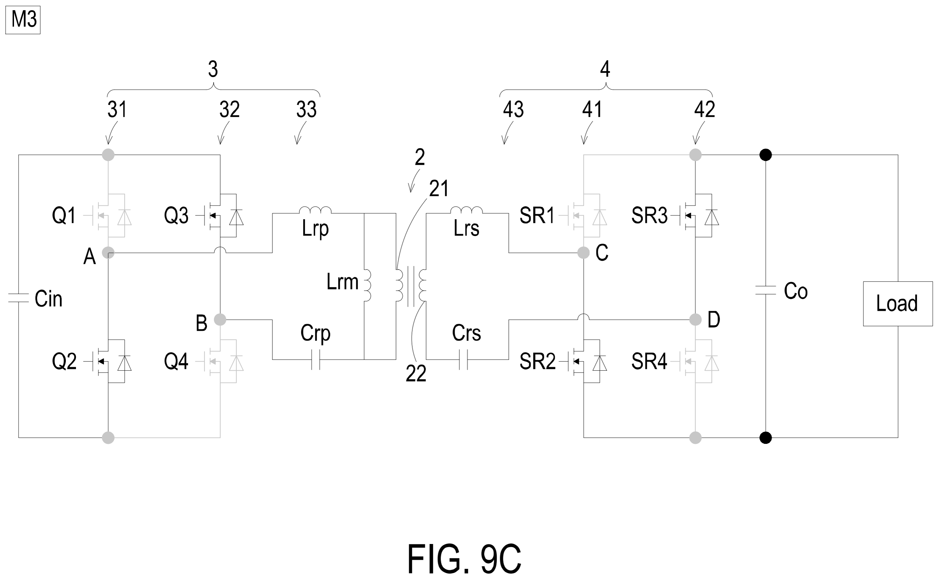

The third operation mode M3 is shown in FIG. 9C. In the third operation M3, the second sub switch Q2, the third sub switch Q3, the sixth sub switch SR2 and the seventh sub switch SR3 are controlled to turn on. The first sub switch Q1, the fourth sub switch Q4, the fifth sub switch SR1 and the eighth sub switch SR4 are controlled to turn off.

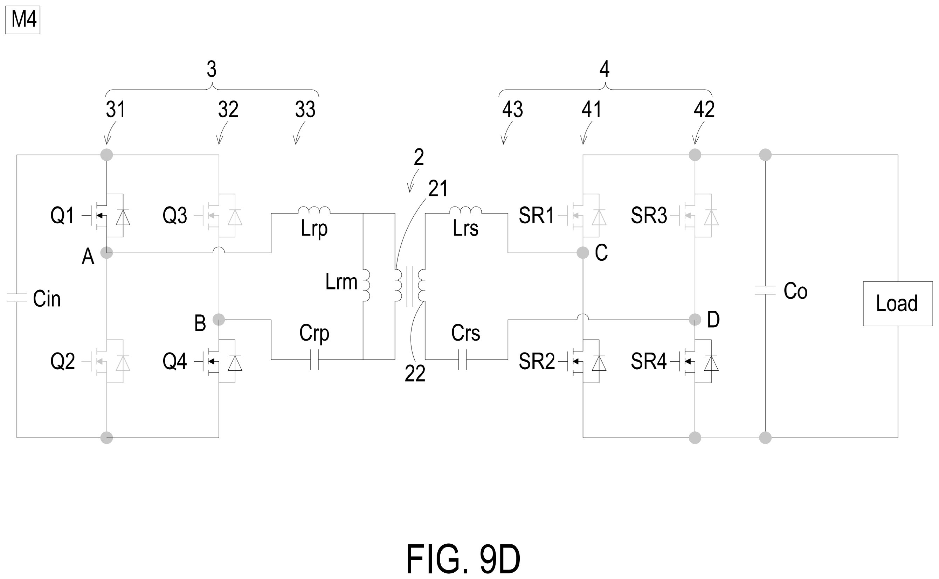

The fourth operation mode M4 is shown in FIG. 9D. In the fourth operation M4, the first sub switch Q1, the fourth sub switch Q4, the sixth sub switch SR2 and the eighth sub switch SR4 are controlled to turn on. The second sub switch Q2, the third sub switch Q3, the fifth sub switch SR1 and the seventh sub switch SR3 are controlled to turn off.

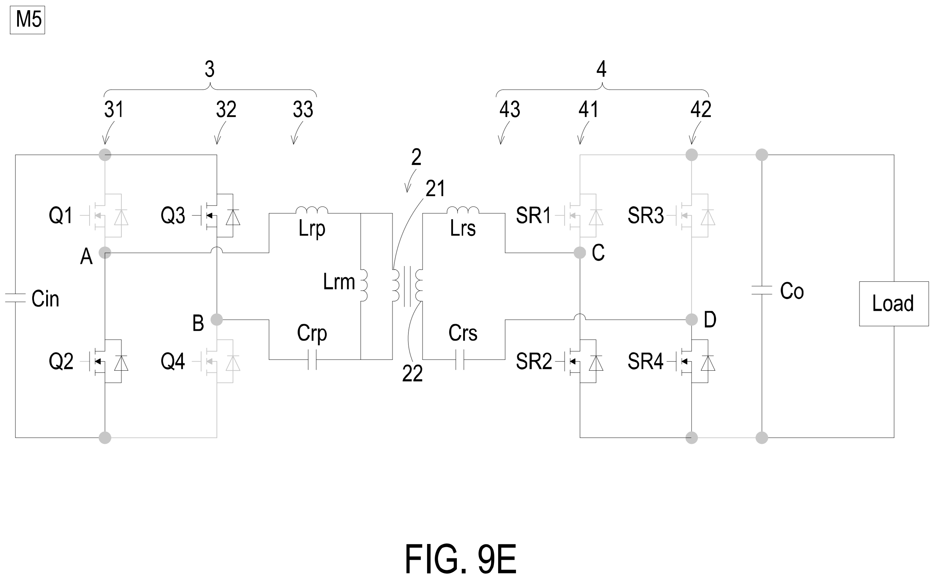

The fifth operation mode M5 is shown in FIG. 9E. In the fifth operation M5, the second sub switch Q2, the third sub switch Q3, the sixth sub switch SR2 and the eighth sub switch SR4 are controlled to turn on. The first sub switch Q1, the fourth sub switch Q4, the fifth sub switch SR1 and the seventh sub switch SR3 are controlled to turn off.

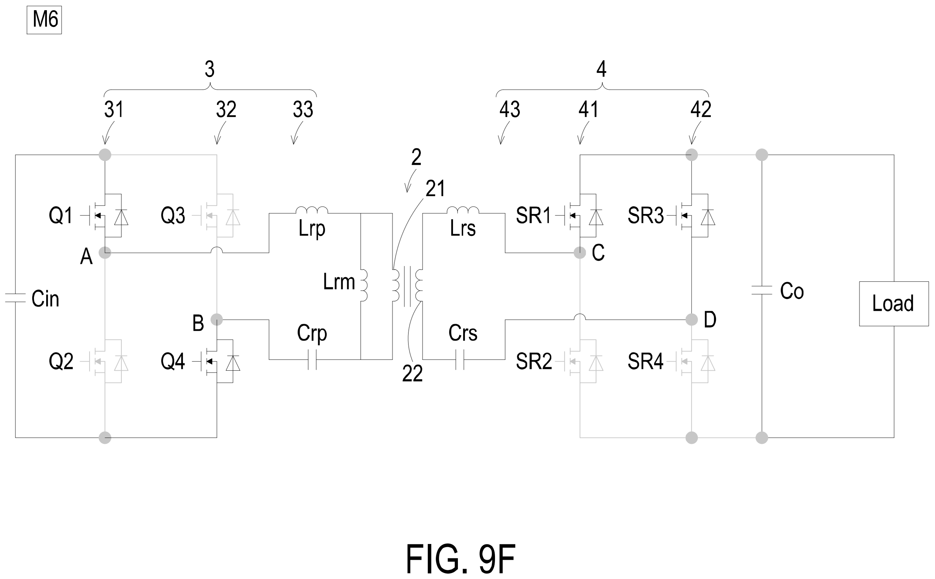

The sixth operation mode M6 is shown in FIG. 9F. In the sixth operation M6, the first sub switch Q1, the fourth sub switch Q4, the fifth sub switch SR1 and the seventh sub switch SR3 are controlled to turn on. The second sub switch Q2, the third sub switch Q3, the sixth sub switch SR2 and the eighth sub switch SR4 are controlled to turn off.

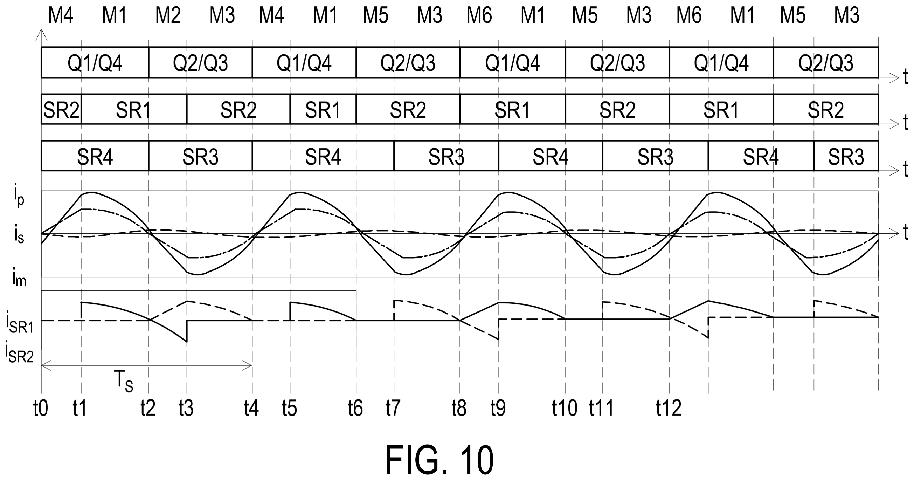

FIG. 10 shows waveforms of operation of the primary switches and the secondary switches and the current of elements of the DC-DC power supply of FIG. 1. As shown in FIG. 10, the operation of the primary switches, the operation of the secondary switches, current $i_P$ through the first connection node A, current $i_{Lr}$ through the third connection node C, current $i_m$ of second resonant inductor Lrm, current $i_{SR1}$ of the fifth sub switch SR1 and current $i_{SR2}$ of the sixth sub switch SR2 are shown in sequence. In FIG. 10, the operation modes is the fourth mode M4, the first mode M1, the second mode M2, the third mode M3, the fourth mode M4, the first mode M1, the fifth mode M5, the third mode M3, the sixth mode M6, the first mode M1, the fifth mode M5, the third mode M3, the sixth mode M6, the first mode M1, the fifth mode M5 and the third mode M3 in sequence.

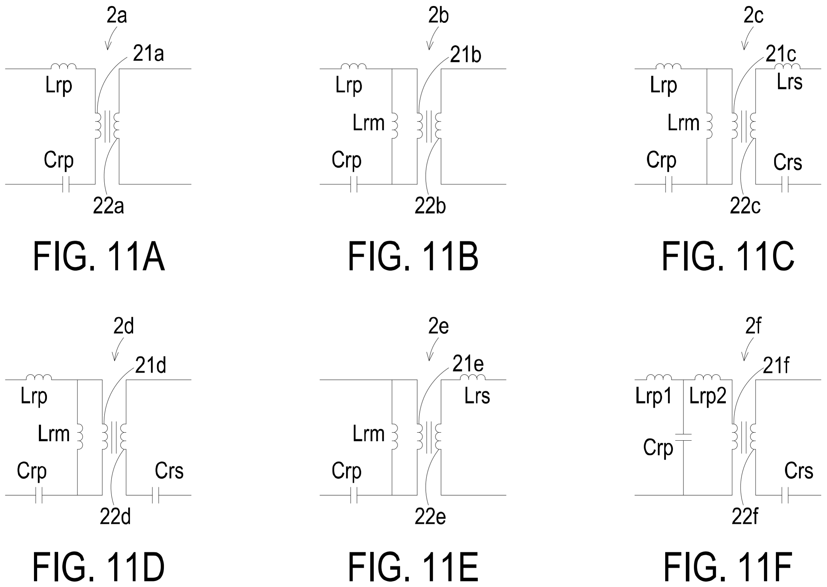

In some embodiments, the structure of the first resonant sub circuit of the primary circuit and the second resonant sub circuit of the secondary circuit can be adjusted according to requirement. FIGS. 11A to 11F are schematic circuit views illustrating the first resonant sub circuit of the primary circuit and the second resonant sub circuit of the DC-DC power supply of the present disclosure. As shown in FIG. 11A, the first resonant sub circuit, the second resonant sub circuit and the transformer forms a SRC structure. The first resonant sub circuit includes a first resonant inductor Lrp and a first resonant capacitor Crp. The first resonant inductor Lrp is connected with one end of the primary winding 21a of the transformer 2a. The first resonant capacitor Crp is connected with the other end of the primary winding 21a of the transformer 2a. The second resonant sub circuit does not include any element.

As shown in FIG. 11B, the first resonant sub circuit, the second resonant sub circuit and the transformer forms an LLC structure. The first resonant sub circuit includes a first resonant inductor Lrp, a second resonant inductor Lrm and a first resonant capacitor Crp. The first resonant inductor Lrp is connected with one end of the primary winding 21b of the transformer 2b. The first resonant capacitor Crp is connected with the other end of the primary winding 21b of the transformer 2b. The second resonant inductor Lrm is connected with the primary winding 21b in parallel. The second resonant sub circuit does not include any element.

As shown in FIG. 11C, the first resonant sub circuit, the second resonant sub circuit and the transformer forms a CLLLC structure. The first resonant sub circuit includes a first resonant inductor Lrp, a second resonant inductor Lrm and a first resonant capacitor Crp. The first resonant inductor Lrp is connected with one end of the primary winding 21c of the transformer 2c. The first resonant capacitor Crp is connected with the other end of the primary winding 21c of the transformer 2c. The second resonant inductor Lrm is connected with the primary winding 21c in parallel. The second resonant sub circuit includes a third resonant inductor Lrs and a second resonant capacitor Crs. The third resonant inductor Lrs is connected with one end of the secondary winding 22c of the transformer 2c. The second resonant capacitor Crs is connected with the other end of the secondary winding 22c of the transformer 2c.

As shown in FIG. 11D, the first resonant sub circuit, the second resonant sub circuit and the transformer forms a CLLC structure. The first resonant sub circuit includes a first resonant inductor Lrp, a second resonant inductor Lrm and a first resonant capacitor Crp. The first resonant inductor Lrp is connected with one end of the primary winding 21d of the transformer 2d. The first resonant capacitor Crp is connected with the other end of the primary winding 21d of the transformer 2d. The second resonant inductor Lrm is connected with the primary winding 21d in parallel. The second resonant sub circuit includes a second resonant capacitor Crs. The second resonant capacitor Crs is connected with one end of the secondary winding 22d of the transformer 2d.

As shown in FIG. 11E, the first resonant sub circuit, the second resonant sub circuit and the transformer forms a CLL structure. The first resonant sub circuit includes a second resonant inductor Lrm and a first resonant capacitor Crp. The first resonant capacitor Crp is connected with one end of the primary winding 21e of the transformer 2e. The second resonant inductor Lrm is connected with the primary winding 21e in parallel. The second resonant sub circuit includes a third resonant inductor Lrs. The third resonant inductor Lrs is connected with one end of the secondary winding 22e of the transformer 2e.

As shown in FIG. 11F, the first resonant sub circuit, the second resonant sub circuit and the transformer forms an LCL-T structure. The first resonant sub circuit includes two first resonant inductors Lrp1, Lrp2 and a first resonant capacitor Crp. The two first resonant inductors Lrp1, Lrp2 is connected in series with one end of the primary winding 21f of the transformer 2f. The first resonant capacitor Crp is connected between the middle node of the two first resonant inductors Lrp1, Lrp2 and the other end of the primary winding 21f of the transformer 2f. The second resonant sub circuit includes a second resonant capacitor Crs. The second resonant capacitor Crs is connected with one end of the secondary winding 22f of the transformer 2f.

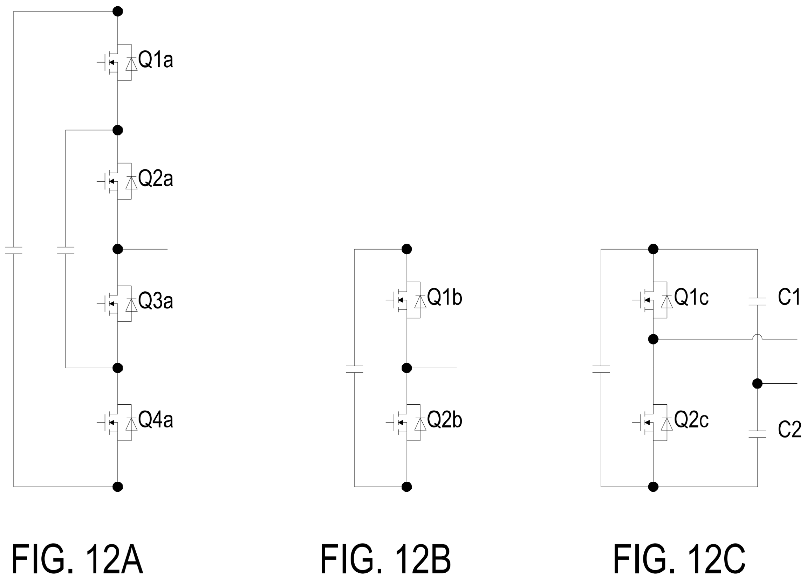

In some embodiments, the structure of the bridge arm of the primary circuit and the bridge arm of the secondary circuit can be adjusted according to requirement. FIGS. 12A to 12E are schematic circuit views illustrating the bridge arm of the primary circuit and the bridge arm of the secondary circuit of the DC-DC power supply of the present disclosure.

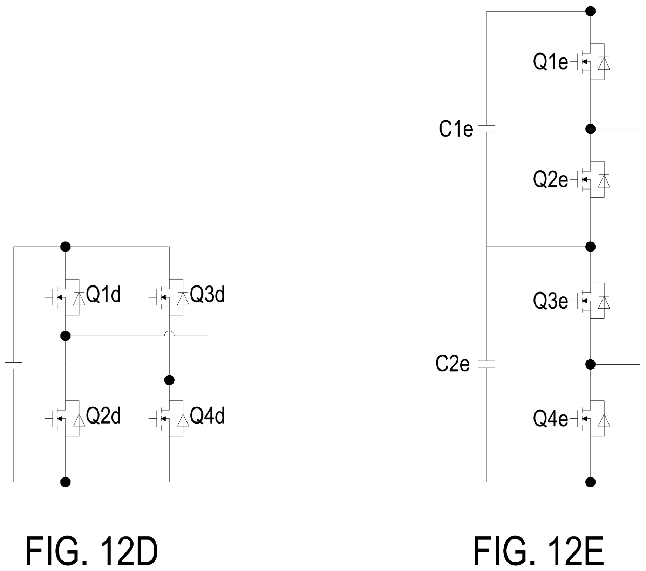

As shown in FIG. 12A, the bridge arm of the primary circuit (or the secondary circuit) forms a three-level circuit. The bridge arm includes four primary switches Q1a, Q2a, Q3a, Q4a connected in series. As shown in FIG. 12B, the bridge arm of the primary circuit (or the secondary circuit) forms a full bridge circuit. The bridge arm includes two primary switches Q1b, Q2b connected in series. As shown in FIG. 12C, the bridge arm of the primary circuit (or the secondary circuit) forms a full bridge circuit. The bridge arm includes two primary switches Q1c, Q2c and two capacitors C1, C2. The two primary switches Q1c, Q2c are connected in series. The two capacitors C1, C2 are connected in series. The two primary switches Q1c, Q2c and the two capacitors C1, C2 are connected in parallel. As shown in FIG. 12D, the bridge arm of the primary circuit (or the secondary circuit) forms a half bridge circuit. The bridge arm includes four primary switches Q1d, Q2d, Q3d, Q4d. The two primary switches Q1d, Q2d are connected in series. The two primary switches Q3d, Q4d are connected in series. The two primary switches Q1d, Q2d and the two primary switches Q3d, Q4d are connected in parallel. As shown in FIG. 12E, the bridge arm of the primary circuit (or the secondary circuit) forms a stacked half bridge circuit. The bridge arm includes four primary switches Q1e, Q2e, Q3e, Q4e, and two capacitors C1e, C2e. The four primary switches Q1e, Q2e, Q3e, Q4e are connected in series. The capacitor C1e is connected with the two primary switches Q1e, Q2e in parallel. The capacitor C2e is connected with the two primary switches Q3e, Q4e in parallel.

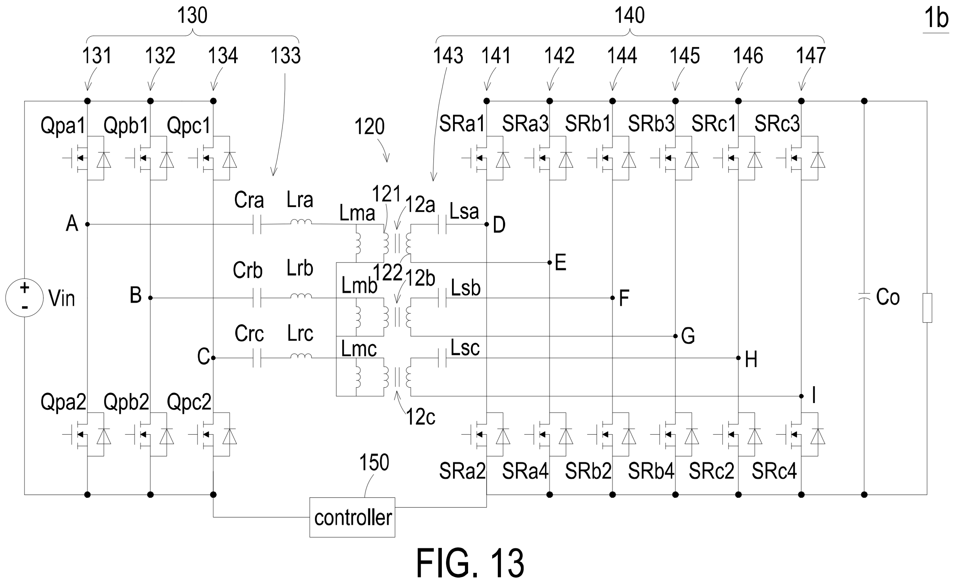

FIG. 13 is a schematic circuit view illustrating a DC-DC power supply according to a third embodiment of the present disclosure. As shown in FIG. 13, the DC-DC power supply 1b includes a transformer assembly 120, a primary circuit 130, a secondary circuit 140, an output capacitor Co and a controller 150. The transformer assembly 120 includes a first transformer 12a, a second transformer 12b and a third transformer 12c. Each transformer 12a, 12b, 12c includes a primary winding 121 and a secondary winding 122. The primary circuit 130 is connected with the primary winding 121 of the transformer 12a, 12b, 12c. The primary circuit 130 includes a first bridge arm 131, a second bridge arm 132, a third bridge arm 134 and a first resonant sub circuit 133. The first bridge arm 131 includes two first primary switches Qpa1, Qpa2. The two first primary switches Qpa1, Qpa2 are connected in series to form a first connection node A. The second bridge arm 132 is connected with the first bridge arm 131 in parallel. The second bridge arm 132 includes two second primary switches Qpb1, Qpb2. The two second primary switches Qpb1, Qpb2 are connected in series to form a second connection node B. The third bridge arm 134 is connected with the first bridge arm 131 and the second bridge arm 132 in parallel. The third bridge arm 134 includes two third primary switches Qpc1, Qpc2. The two third primary switches Qpc1, Qpc2 are connected in series to form a third connection node C.

The first resonant sub circuit 133 includes three first resonant inductors Lra, Lrb, Lrc, three second resonant inductors Lma, Lmb, Lmc and three first resonant capacitors Cra, Crb, Crc. The first resonant capacitor Cra and the first resonant inductor Lra are connected in series between the first connection node A and one end of the primary winding 121 of the transformer 12a. The second resonant inductor Lma is connected with the primary winding 121 of the transformer 12a in parallel. The first resonant capacitor Crb and the first resonant inductor Lrb are connected in series between the second connection node B and one end of the primary winding 121 of the transformer 12b. The second resonant inductor Lmb is connected with the primary winding 121 of the transformer 12b in parallel. The first resonant capacitor Crc and the first resonant inductor Lrc are connected in series between the third connection node C and one end of the primary winding 121 of the transformer 12c. The second resonant inductor Lmc is connected with the primary winding 121 of the transformer 12c in parallel. The other end of the primary winding 121 of the transformer 12a, the other end of the primary winding 121 of the transformer 12b and the other end of the primary winding 121 of the transformer 12c are connected.

The secondary circuit 140 is connected with the secondary winding 122 of the transformer 12a, 12b, 12c. The secondary circuit 140 includes a fourth bridge arm 141, a fifth bridge arm 142, a sixth bridge arm 144, a seventh bridge arm 145, an eighth bridge arm 146, a ninth bridge arm 147 and a second resonant sub circuit 143.

The fourth bridge arm 141 includes two first secondary switches SRa1, SRa2. The first secondary switches SRa1, SRa2 are connected in series to form a fourth connection node D. The fifth bridge arm 142 is connected with the fourth bridge arm 141 in parallel. The fifth bridge arm 142 includes two first secondary switches SRa3, SRa4. The first secondary switches SRa3, SRa4 are connected in series to form a fifth connection node E. The fifth connection node E is connected with one end of the secondary winding 122 of the transformer 12a. The sixth bridge arm 144 is connected with the fourth bridge arm 141 and the fifth bridge arm 142 in parallel. The sixth bridge arm 144 includes two second secondary switches SRb1, SRb2. The second secondary switches SRb1, SRb2 are connected in series to form a sixth connection node F. The seventh bridge arm 145 is connected with the fourth bridge arm 141, the fifth bridge arm 142 and the sixth bridge arm 144 in parallel. The seventh bridge arm 145 includes two second secondary switches SRb3, SRb4. The second secondary switches SRb3, SRb3 are connected in series to form a seventh connection node G. The seventh connection node G is connected with one end of the secondary winding 122 of the transformer 12b. The eighth bridge arm 146 is connected with the fourth bridge arm 141, the fifth bridge arm 142, the sixth bridge arm 144 and the seventh bridge arm 145 in parallel. The eighth bridge arm 146 includes two third secondary switches SRc1, SRc2. The third secondary switches SRc1, SRc2 are connected in series to form an eighth connection node H. The ninth bridge arm 147 is connected with the fourth bridge arm 141, the fifth bridge arm 142, the sixth bridge arm 144, the seventh bridge arm 145 and the eighth bridge arm 146 in parallel. The ninth bridge arm 147 includes two third secondary switches SRc3, SRc4. The third secondary switches SRc3, SRc4 are connected in series to form a tenth connection node I. The tenth connection node I is connected with one end of the secondary winding 122 of the transformer 12c.

The second resonant sub circuit 143 includes three third resonant inductors Lsa, Lsb, Lsc. The third resonant inductor Lsa is connected between the fourth connection node D and the other end of the secondary winding 122 of the transformer 12a. The third resonant inductor Lsb is connected between the sixth connection node F and the other end of the secondary winding 122 of the transformer 12b. The third resonant inductor Lsc is connected between the eighth connection node H and the other end of the secondary winding 122 of the transformer 12c.

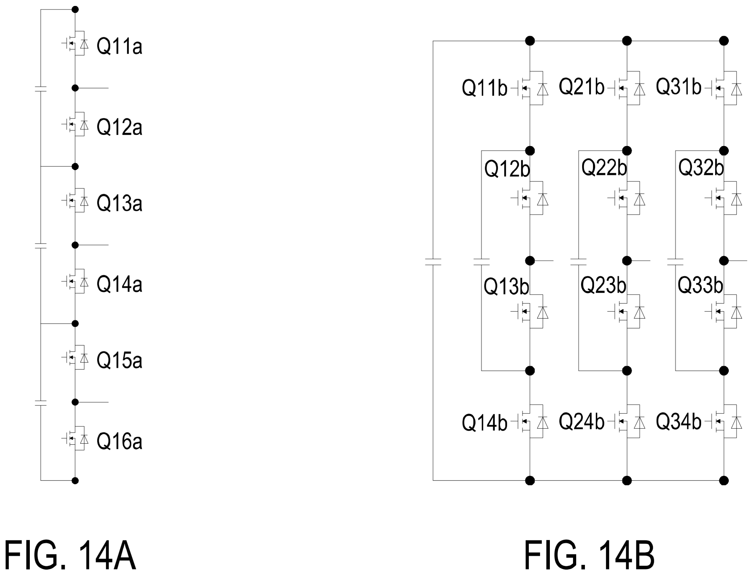

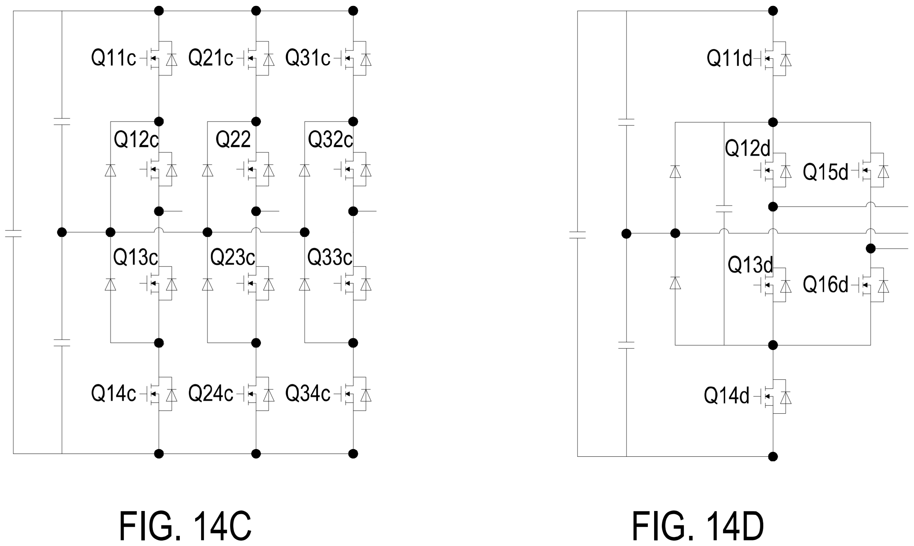

Certainly, the transformers 12a, 12b, 12c can be replaced by the structures of FIG. 11A to 11F, and the bridge arm of the secondary circuit can be replaced by the structures of FIG. 12A to 12E. In some embodiments, the structure of the bridge arm of the primary circuit can be adjusted according to requirement. FIGS. 14A to 14D are schematic circuit views illustrating the bridge arm of the primary circuit and the bridge arm of the secondary circuit of the DC-DC power supply of FIG. 13. As shown in FIGS. 14A to 14D, the primary circuit is a cascaded stacked circuit, a three-phase three-level circuit, or a simplified three-phase three-level circuit, and the detail structures are not redundantly described.

From the above description, the DC-DC power supply of the present disclosure includes a controller. The controller is configured to alternately control the operation of the two first primary switches of the first bridge arm and the two second primary switches of the second bridge arm for periodically adjusting a turn-off loss difference therebetween. The phase shift and the delay time between the first bridge arm and the second bridge arm is switched. The turn-off losses of the devices are exchanged. Consequently, the thermal performance of the DC-DC power supply is balanced, and the losses are distributed evenly among the devices.

## Claims

1.   A DC-DC power supply (1, 1a), **characterized by** comprising:

a transformer (2, 2a, 2b, 2c, 2d, 2e, 2f) comprising a primary winding (21, 21a, 21b, 21c, 21d, 21e, 21f) and a secondary winding (22, 22a, 22b, 22c, 22d, 22e, 22f);
a primary circuit (3) connected with the primary winding (21, 21a, 21b, 21c, 21d, 21e, 21f) and comprising a plurality of first primary switches (Q1, Q2, Q1a, Q2a, Q3a, Q4a, Q1b, Q2b, Q1c, Q2c, Q1d, Q2d, Q1e, Q2e), and a plurality of second primary switches (Q3, Q4, Q1a, Q2a, Q3a, Q4a, Q1b, Q2b, Q3d, Q4d, Q3e, Q4e);
a secondary circuit (4) connected with the secondary winding (22, 22a, 22b, 22c, 22d, 22e, 22f); and
a controller (5, 74) configured to alternately control the operation of the first primary switches (Q1, Q2, Q1a, Q2a, Q3a, Q4a, Q1b, Q2b, Q1c, Q2c, Q1d, Q2d, Q1e, Q2e) and the second primary switches (Q3, Q4, Q1a, Q2a, Q3a, Q4a, Q1b, Q2b, Q3d, Q4d, Q3e, Q4e) for periodically adjusting a turn-off loss difference therebetween.

2. The DC-DC power supply (1, 1a) according to claim 1, wherein the secondary circuit (4) comprises a plurality of first secondary switches (SR1, SR2, Q1a, Q2a, Q3a, Q4a, Q1b, Q2b, Q1c, Q2c, Q1d, Q2d, Q1e, Q2e), and a plurality of second secondary switches (SR3, SR4, Q1a, Q2a, Q3a, Q4a, Q1b, Q2b, Q3d, Q4d, Q3e, Q4e), wherein the first primary switches (Q1, Q2, Q1a, Q2a, Q3a, Q4a, Q1b, Q2b, Q1c, Q2c, Q1d, Q2d, Q1e, Q2e) comprises a first sub switch (Q1, Q1a, Q2a, Q1b, Q1c, Q1d, Q1e) and a second sub switch (Q2, Q3a, Q4a, Q2b, Q2c, Q2d, Q2e), the second primary switches (Q3, Q4, Q1a, Q2a, Q3a, Q4a, Q1b, Q2b, Q3d, Q4d, Q3e, Q4e) comprises a third sub switch (Q3, Q1a, Q2a, Q1b, Q3d, Q3e) and a fourth sub switch (Q4, Q3a, Q4a, Q2b, Q4d, Q4e), the first secondary switches (SR1, SR2, Q1a, Q2a, Q3a, Q4a, Q1b, Q2b, Q1c, Q2c, Q1d, Q2d, Q1e, Q2e) comprises a fifth sub switch (SR1, Q1a, Q2a, Q1b, Q1c, Q1d, Q1e) and a sixth sub switch (SR2, Q3a, Q4a, Q2b, Q2c, Q2d, Q2e), the second secondary switches (SR3, SR4, Q1a, Q2a, Q3a, Q4a, Q1b, Q2b, Q3d, Q4d, Q3e, Q4e) comprises a seventh sub switch (SR3, Q1a, Q2a, Q1b, Q3d, Q3e) and an eighth sub switch (SR4, Q3a, Q4a, Q2b, Q4d, Q4e).

3. The DC-DC power supply (1, 1a) according to claim 2, wherein when the fifth sub switch (SR1, Q1a, Q2a, Q1b, Q1c, Q1d, Q1e) and the eighth sub switch (SR4, Q3a, Q4a, Q2b, Q4d, Q4e) are turned on and the sixth sub switch (SR2, Q3a, Q4a, Q2b, Q2c, Q2d, Q2e) and the seventh sub switch (SR3, Q1a, Q2a, Q1b, Q3d, Q3e) are turned off, the controller (5, 74) controls the first sub switch (Q1, Q1a, Q2a, Q1b, Q1c, Q1d, Q1e) to turn on, and the controller (5, 74) switches conduction from the fourth sub switch (Q4, Q3a, Q4a, Q2b, Q4d, Q4e) to the third sub switch (Q3, Q1a, Q2a, Q1b, Q3d, Q3e).

4. The DC-DC power supply (1, 1a) according to claim 2, wherein when the sixth sub switch (SR2, Q3a, Q4a, Q2b, Q2c, Q2d, Q2e) and the seventh sub switch (SR3, Q1a, Q2a, Q1b, Q3d, Q3e) are turned on and the fifth sub switch (SR1, Q1a, Q2a, Q1b, Q1c, Q1d, Q1e) and the eighth sub switch (SR4, Q3a, Q4a, Q2b, Q4d, Q4e) are turned off, the controller (5, 74) controls the second sub switch (Q2, Q3a, Q4a, Q2b, Q2c, Q2d, Q2e) to turn on, and the controller (5, 74) switches conduction from the third sub switch (Q3, Q1a, Q2a, Q1b, Q3d, Q3e) to the fourth sub switch (Q4, Q3a, Q4a, Q2b, Q4d, Q4e).

5. The DC-DC power supply (1, 1a) according to claim 1, wherein the first primary switches (Q1, Q2, Q1a, Q2a, Q3a, Q4a, Q1b, Q2b, Q1c, Q2c, Q1d, Q2d, Q1e, Q2e) exhibit a first turn-off loss (P2), the second primary switches (Q3, Q4, Q1a, Q2a, Q3a, Q4a, Q1b, Q2b, Q3d, Q4d, Q3e, Q4e) exhibit a second turn-off loss (P1), a loss difference ($\Delta$P) is formed between the first turn-off loss (P2) and the second turn-off loss (P1), the first turn-off loss (P2) is greater than the second turn-off loss (P1) during a first duty cycle ($D_P$), the first turn-off loss (P2) is less than the second turn-off loss (P1) during a second duty cycle ($1-D_P$).

6. The DC-DC power supply (1a) according to claim 1, wherein the controller (5, 74) comprises:

a phase shift control unit (51) detecting an output voltage (Vo_FB), a bus voltage (Vbus_FB) and an output current (Io_FB) of the DC-DC power supply (1a) to output a parameter signal ($\beta$);
a voltage and current detecting unit (52) detecting the output voltage (Vo_FB) and the output current (Io_FB) to output a frequency signal ;
a time process unit (53) detecting the frequency signal and the parameter signal ($\beta$) to output an update signal; and
a PWM unit (54) detecting the parameter signal ($\beta$), the frequency signal and the update signal to output a PWM signal, so as to control the operation of the first primary switches (Q1, Q2, Q1a, Q2a, Q3a, Q4a, Q1b, Q2b, Q1c, Q2c, Q1d, Q2d, Q1e, Q2e) and the second primary switches (Q3, Q4, Q1a, Q2a, Q3a, Q4a, Q1b, Q2b, Q3d, Q4d, Q3e, Q4e) of the primary circuit (3).

7. A control method applied to a DC-DC power supply (1, 1a), the DC-DC power supply (1, 1a) comprising a transformer (2, 2a, 2b, 2c, 2d, 2e, 2f), a primary circuit (3) and a secondary circuit (4), the primary circuit (3) comprising a plurality of first primary switches (Q1, Q2, Q1a, Q2a, Q3a, Q4a, Q1b, Q2b, Q1c, Q2c, Q1d, Q2d, Q1e, Q2e), and a plurality of second primary switches (Q3, Q4, Q1a, Q2a, Q3a, Q4a, Q1b, Q2b, Q3d, Q4d, Q3e, Q4e), and **characterized by** the control method comprising:
providing a controller (5, 74) to alternately control the operation of the first primary switches (Q1, Q2, Q1a, Q2a, Q3a, Q4a, Q1b, Q2b, Q1c, Q2c, Q1d, Q2d, Q1e, Q2e) and the second primary switches (Q3, Q4, Q1a, Q2a, Q3a, Q4a, Q1b, Q2b, Q3d, Q4d, Q3e, Q4e) of the primary circuit (3) for periodically adjusting a turn-off loss difference therebetween.

8. The control method according to claim 7, wherein the secondary circuit (4) comprises a plurality of first secondary switches (SR1, SR2, Q1a, Q2a, Q3a, Q4a, Q1b, Q2b, Q1c, Q2c, Q1d, Q2d, Q1e, Q2e), and a plurality of second secondary switches (SR3, SR4, Q1a, Q2a, Q3a, Q4a, Q1b, Q2b, Q3d, Q4d, Q3e, Q4e), the first primary switches (Q1, Q2, Q1a, Q2a, Q3a, Q4a, Q1b, Q2b, Q1c, Q2c, Q1d, Q2d, Q1e, Q2e) comprises a first sub switch (Q1, Q1a, Q2a, Q1b, Q1c, Q1d, Q1e) and a second sub switch (Q2, Q3a, Q4a, Q2b, Q2c, Q2d, Q2e), the second primary switches (Q3, Q4, Q1a, Q2a, Q3a, Q4a, Q1b, Q2b, Q3d, Q4d, Q3e, Q4e) comprises a third sub switch (Q3, Q1a, Q2a, Q1b, Q3d, Q3e) and a fourth sub switch (Q4, Q3a, Q4a, Q2b, Q4d, Q4e), the first secondary switches (SR1, SR2, Q1a, Q2a, Q3a, Q4a, Q1b, Q2b, Q1c, Q2c, Q1d, Q2d, Q1e, Q2e) comprises a fifth sub switch (SR1, Q1a, Q2a, Q1b, Q1c, Q1d, Q1e) and a sixth sub switch (SR2, Q3a, Q4a, Q2b, Q2c, Q2d, Q2e), the second secondary switches (SR3, SR4, Q1a, Q2a, Q3a, Q4a, Q1b, Q2b, Q3d, Q4d, Q3e, Q4e) comprises a seventh sub switch (SR3, Q1a, Q2a, Q1b, Q3d, Q3e) and an eighth sub switch (SR4, Q3a, Q4a, Q2b, Q4d, Q4e), wherein the control method further comprises:
when the fifth sub switch (SR1, Q1a, Q2a, Q1b, Q1c, Q1d, Q1e) and the eighth sub switch (SR4, Q3a, Q4a, Q2b, Q4d, Q4e) are turned on and the sixth sub switch (SR2, Q3a, Q4a, Q2b, Q2c, Q2d, Q2e) and the seventh sub switch (SR3, Q1a, Q2a, Q1b, Q3d, Q3e) are turned off, the controller (5, 74) controls the first sub switch (Q1, Q1a, Q2a, Q1b, Q1c, Q1d, Q1e) to turn on, and the controller (5, 74) switches conduction from the fourth sub switch (Q4, Q3a, Q4a, Q2b, Q4d, Q4e) to the third sub switch (Q3, Q1a, Q2a, Q1b, Q3d, Q3e).

9. The control method according to claim 7, wherein the secondary circuit (4) comprises a plurality of first secondary switches (SR1, SR2, Q1a, Q2a, Q3a, Q4a, Q1b, Q2b, Q1c, Q2c, Q1d, Q2d, Q1e, Q2e), and a plurality of second secondary switches (SR3, SR4, Q1a, Q2a, Q3a, Q4a, Q1b, Q2b, Q3d, Q4d, Q3e, Q4e), the first primary switches (Q1, Q2, Q1a, Q2a, Q3a, Q4a, Q1b, Q2b, Q1c, Q2c, Q1d, Q2d, Q1e, Q2e) comprises a first sub switch (Q1, Q1a, Q2a, Q1b, Q1c, Q1d, Q1e) and a second sub switch (Q2, Q3a, Q4a, Q2b, Q2c, Q2d, Q2e), the second primary switches (Q3, Q4, Q1a, Q2a, Q3a, Q4a, Q1b, Q2b, Q3d, Q4d, Q3e, Q4e) comprises a third sub switch (Q3, Q1a, Q2a, Q1b, Q3d, Q3e) and a fourth sub switch (Q4, Q3a, Q4a, Q2b, Q4d, Q4e), the first secondary switches (SR1, SR2, Q1a, Q2a, Q3a, Q4a, Q1b, Q2b, Q1c, Q2c, Q1d, Q2d, Q1e, Q2e) comprises a fifth sub switch (SR1, Q1a, Q2a, Q1b, Q1c, Q1d, Q1e) and a sixth sub switch (SR2, Q3a, Q4a, Q2b, Q2c, Q2d, Q2e), the second secondary switches (SR3, SR4, Q1a, Q2a, Q3a, Q4a, Q1b, Q2b, Q3d, Q4d, Q3e, Q4e) comprises a seventh sub switch (SR3, Q1a, Q2a, Q1b, Q3d, Q3e) and an eighth sub switch (SR4, Q3a, Q4a, Q2b, Q4d, Q4e), wherein the control method further comprises:
when the sixth sub switch (SR2, Q3a, Q4a, Q2b, Q2c, Q2d, Q2e) and the seventh sub switch (SR3, Q1a, Q2a, Q1b, Q3d, Q3e) are turned on and the fifth sub switch (SR1, Q1a, Q2a, Q1b, Q1c, Q1d, Q1e) and the eighth sub switch (SR4, Q3a, Q4a, Q2b, Q4d, Q4e) are turned off, the controller (5, 74) controls the second sub switch (Q2, Q3a, Q4a, Q2b, Q2c, Q2d, Q2e) to turn on, and the controller (5, 74) switches conduction from the third sub switch (Q3, Q1a, Q2a, Q1b, Q3d, Q3e) to the fourth sub switch (Q4, Q3a, Q4a, Q2b, Q4d, Q4e).

10. The control method according to claim 7, wherein the first primary switches (Q1, Q2, Q1a, Q2a, Q3a, Q4a, Q1b, Q2b, Q1c, Q2c, Q1d, Q2d, Q1e, Q2e) exhibit a first turn-off loss ($P2$), the second primary switches (Q3, Q4, Q1a, Q2a, Q3a, Q4a, Q1b, Q2b, Q3d, Q4d, Q3e, Q4e) exhibit a second turn-off loss ($P1$), a loss difference ($\Delta P$) is formed between the first turn-off loss ($P2$) and the second turn-off loss ($P1$), the first turn-off loss ($P2$) is greater than the second turn-off loss ($P1$) during a first duty cycle ($D_P$), the first turn-off loss ($P2$) is less than the second turn-off loss ($P1$) during a second duty cycle ($1-D_P$), wherein a first average loss of the first primary switches (Q1, Q2, Q1a, Q2a, Q3a, Q4a, Q1b, Q2b, Q1c, Q2c, Q1d, Q2d, Q1e, Q2e) during the first duty cycle ($D_P$) is a first loss of the first primary switches (Q1, Q2, Q1a, Q2a, Q3a, Q4a, Q1b, Q2b, Q1c, Q2c, Q1d, Q2d, Q1e, Q2e) subtracted by the product of the first duty cycle and the loss difference ($\Delta P$), a second average loss of the second primary switches (Q3, Q4, Q1a, Q2a, Q3a, Q4a, Q1b, Q2b, Q3d, Q4d, Q3e, Q4e) during the second duty cycle ($1-Dp$) is a second loss of the second primary switches (Q3, Q4, Q1a, Q2a, Q3a, Q4a, Q1b, Q2b, Q3d, Q4d, Q3e, Q4e) subtracted by the product of the second duty cycle ($1-D_P$) and the loss difference ($\Delta P$).

11. The control method according to claim 7, wherein the control method further comprises:
the controller (5, 74) alternately controlling the operation of the first secondary switches (SR1, SR2, Q1a, Q2a, Q3a, Q4a, Q1b, Q2b, Q1c, Q2c, Q1d, Q2d, Q1e, Q2e) and the second secondary switches (SR3, Q1a, Q2a, Q3a, Q4a, Q1b, Q2b, Q3d, Q4d, Q3e, Q4e) of the secondary circuit (4).

12. The control method according to claim 7, wherein the control method further comprises:

providing a phase shift control unit (51) to detect an output voltage (Vo_FB), a bus voltage (Vbus_FB) and an output current (Io_FB) of the DC-DC power supply (1, 1a) to output a parameter signal ($\beta$);
providing a voltage and current detecting unit (52) to detect the output voltage (Vo_FB) and the output current (Io_FB) to output a frequency signal (fs);

providing a time process unit (53) to detect the frequency signal (fs) and the parameter signal ($\beta$) to output an update signal; and

providing a PWM unit (54) to detect the parameter signal ($\beta$), the frequency signal (fs) and the update signal to output a PWM signal, so as to control the operation of the first primary switches (Q1, Q2, Q1a, Q2a, Q3a, Q4a, Q1b, Q2b, Q1c, Q2c, Q1d, Q2d, Q1e, Q2e) and the second primary switches (Q3, Q4, Q1a, Q2a, Q3a, Q4a, Q1b, Q2b, Q3d, Q4d, Q3e, Q4e) of the primary circuit (3).

13. A DC-DC power supply (1b), **characterized by** comprising:

three transformers (12a, 12b, 12c), each of the three transformers (12a, 12b, 12c) comprising a primary winding (121) and a secondary winding (122);

a primary circuit (130) connected with the primary winding (121) and comprising a plurality of first primary switches (Qpa1, Qpa2 , Q11a, Q12a, Q11b, Q12b, Q13b, Q14b, Q11c, Q12c, Q13c, Q14c, Q11d, Q12d), a plurality of second primary switches (Qpb1, Qpb2, Q13a, Q14a, Q21b, Q22b, Q23b, Q24b, Q21c, Q22c, Q23c, Q24c, Q13d, Q14d), and a plurality of third primary switches (Qpc1, Qpc2, Q15a, Q15a, Q31b, Q32b, Q33b, Q34b, Q31c, Q32c, Q33c, Q34c, Q15d, Q16d);

a secondary circuit (140) connected with the secondary winding (122) and comprising a plurality of first secondary switches (SRa1, SRa2, SRa3, SRa4, Q11a, Q12a, Q11b, Q12b, Q13b, Q14b, Q11c, Q12c, Q13c, Q14c, Q11d, Q12d), a plurality of second secondary switches (SRb1, SRb2, SRb3, SRb4, Q13a, Q14a, Q21b, Q22b, Q23b, Q24b, Q21c, Q22c, Q23c, Q24c, Q13d, Q14d), and a plurality of third secondary switches (SRc1, SRc2, SRc3, SRc4, Q15a, Q15a, Q31b, Q32b, Q33b, Q34b, Q31c, Q32c, Q33c, Q34c, Q15d, Q16d); and

a controller (150) configured to alternately control the operation of the first secondary switches (SRa1, SRa2, SRa3, SRa4, Q11a, Q12a, Q11b, Q12b, Q13b, Q14b, Q11c, Q12c, Q13c, Q14c, Q11d, Q12d), the second secondary switches (SRb1, SRb2, SRb3, SRb4, Q13a, Q14a, Q21b, Q22b, Q23b, Q24b, Q21c, Q22c, Q23c, Q24c, Q13d, Q14d), and the third secondary switches (SRc1, SRc2, SRc3, SRc4, Q15a, Q15a, Q31b, Q32b, Q33b, Q34b, Q31c, Q32c, Q33c, Q34c, Q15d, Q16d) of the secondary circuit (140) for periodically adjusting a turn-off loss difference therebetween.

14. The DC-DC power supply (1b) according to claim 13, wherein the primary circuit (130) is a cascaded stacked circuit, a three-phase three-level circuit, or a simplified three-phase three-level circuit, wherein the secondary circuit (140) is a full bridge circuit, a half bridge circuit, a stacked half bridge circuit, or a three-level circuit.

15. The DC-DC power supply (1b) according to claim 13, wherein the DC-DC power supply (1b) comprises a plurality of resonant circuits, each of the resonant circuits is connected with the corresponding transformer (12a, 12b, 12c), wherein each of the resonant circuits and the corresponding transformer (12a, 12b, 12c) form a SRC, LLC, CLLLC, CLLC, CLL, or LCL-T circuit.

FIG. 1

FIG. 2

FIG. 3A

FIG. 3B

FIG. 3C

M3

EP 4 749 907 A1

16

FIG. 3D

FIG. 3E

FIG. 3F

FIG. 4A

FIG. 4B

FIG. 5

FIG. 6

EP 4 749 907 A1

FIG. 7

FIG. 8

FIG. 9A

FIG. 9B

FIG. 9C

FIG. 9D

FIG. 9E

FIG. 9F

FIG. 10

EP 4 749 907 A1

FIG. 11A

FIG. 11B

FIG. 11C

FIG. 11D

FIG. 11E

FIG. 11F

EP 4 749 907 A1

FIG. 12A

FIG. 12B

FIG. 12C

FIG. 12E

FIG. 12D

FIG. 13

FIG. 14B

FIG. 14A

EP 4 749 907 A1

**FIG. 14C**

**FIG. 14D**

Europäisches
Patentamt

European
Patent Office

Office européen
des brevets

# EUROPEAN SEARCH REPORT

**Application Number**

EP 25 20 9754

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG CHUANQI ET AL: "Full power range DAB unified ZVS control strategy based on low current RMS", JOURNAL OF PHYSICS: CONFERENCE SERIES IOP PUBLISHING, BRISTOL, GB, vol. 2728, no. 1, 1 March 2024 (2024-03-01), XP020497225, ISSN: 1742-6588, DOI: 10.1088/1742-6596/2728/1/012060 [retrieved on 2024-03-01] * page 7 - page 8; figures 1, 6 * * page 4; table 1 * | 1-12 | INV. H02M3/335 H02M1/32 |
| X | LAI YEN-SHIN ET AL: "Novel Phase-Shift Control Technique for Full-Bridge Converter to Reduce Thermal Imbalance Under Light-Load Condition", IEEE TRANSACTIONS ON INDUSTRY APPLICATIONS. IEEE SERVICE CENTER, PISCATAWAY, NJ., US, vol. 51, no. 2, 1 March 2015 (2015-03-01), pages 1651-1659, XP011575798, ISSN: 0093-9994, DOI: 10.1109/TIA.2014.2347454 [retrieved on 2015-03-17] * page 1653 - page 1654; figures 1, 6, 7(b) * | 1,7 | |
| X | EP 4 391 342 A1 (NICHICON CORP [JP]) 26 June 2024 (2024-06-26) * paragraph [0072] - paragraph [0079]; figure 9 * | 13-15 | |

TECHNICAL FIELDS SEARCHED (IPC)

H02M

-/--

The present search report has been drawn up for all claims

| Place of search | Date of completion of the search | Examiner |
|---|---|---|
| The Hague | 20 March 2026 | van Wesenbeeck, R |

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 20 9754

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN YUXUAN ET AL: "EMI Analysis of Three-Phase Three-Level Flying Capacitors Diode Clamped DAB Converter", 2022 INTERNATIONAL POWER ELECTRONICS CONFERENCE (IPEC-HIMEJI 2022- ECCE ASIA) IEEJ-IAS, 15 May 2022 (2022-05-15), pages 1065-1069, XP034142274, DOI: 10.23919/IPEC-HIMEJI2022-ECCE53331.2022.9806945 [retrieved on 2022-07-01] * figure 1 * ----- | 13,15 | |
| A | LEE YONG-DUK ET AL: "A strategy for balancing switching losses of FB-PS-ZVS DC-DC converters in pulse and sinusoidal ripple current charging applications", 2015 IEEE APPLIED POWER ELECTRONICS CONFERENCE AND EXPOSITION (APEC) IEEE, 15 March 2015 (2015-03-15), pages 3245-3251, XP032775102, DOI: 10.1109/APEC.2015.7104817 [retrieved on 2015-05-08] * figures 1, 7 * ----- | 1-15 | |

TECHNICAL FIELDS
SEARCHED    (IPC)

The present search report has been drawn up for all claims

| Place of search | Date of completion of the search | Examiner |
|---|---|---|
| The Hague | 20 March 2026 | van Wesenbeeck, R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................................

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 25 20 9754

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2026

| Patent document cited in search report | | Publication date | Patent family member(s) | Publication date |
|---|---|---|---|---|
| EP 4391342 | A1 | 26-06-2024 | CN 118382989 A | 23-07-2024 |
| | | | EP 4391342 A1 | 26-06-2024 |
| | | | JP WO2023157916 A1 | 24-08-2023 |
| | | | WO 2023157916 A1 | 24-08-2023 |

EPO FORM P0459

For more details about this annex : see Official Journal of the European Patent Office, No. 12/82